# EUROPEAN PATENT APPLICATION

(11) **EP 4 834 663 A1**
(43) Date of publication of application: **04.11.2026**
(21) Application number: 24926460.7
(22) Date of filing: 01.03.2024
(51) Int. Cl.: B60R 7/06

(54) **CONSOLE, CONSOLE ASSEMBLY AND VEHICLE**

(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: YONG, Kuan, Hangzhou Bay New District Ningbo, Zhejiang 315336 (CN); JIANG, Zhenchao, Hangzhou Bay New District Ningbo, Zhejiang 315336 (CN); CHEN, Xiangning, Hangzhou Bay New District Ningbo, Zhejiang 315336 (CN); GAO, Shishan, Hangzhou Bay New District Ningbo, Zhejiang 315336 (CN); GUAN, Zhongxue, Hangzhou Bay New District Ningbo, Zhejiang 315336 (CN); FAN, Xiaoqin, Hangzhou Bay New District Ningbo, Zhejiang 315336 (CN)
(74) Representative: Michalski Hüttermann & Partner mbB
(86) International application number: PCT/CN2024/079693
(87) International publication number: WO 2025/179584

(57) **Abstract**

A console, a console assembly, and a vehicle. The console includes a console body (10), a first locking structure (20), and a second locking structure (30), the console body (10) having a bearing surface (111c) configured to bear a portable load (200), and the first locking structure (20) and the second locking structure (30) being both disposed on the console body (10) and being both detachably connected to the portable load (200); where the first locking structure (20) is configured to limit a degree of freedom of the portable load (200) in an X direction and/or a Y direction, and the second locking structure (30) is configured to limit a degree of freedom of the portable load (200) in a Z direction.

## Description

### TECHNICAL FIELD

The present disclosure relates to the technical field of consoles, and in particular to a console, a console assembly, and a vehicle.

### BACKGROUND

With the development of society, there are more and more usage scenarios of vehicles, and vehicles have gradually become an indispensable part of life. A console of a vehicle, located between front seats of the vehicle, integrates numerous functions of the vehicle. The storage capacity of the console of the vehicle is one of important functions of the console.

During use of the vehicle, different groups of people may have different requirements for in-vehicle storage and in-vehicle functions, for example, some need to carry a refrigerator in the vehicle, some need to carry a makeup bag in the vehicle, or some need to store small items in the vehicle.

However, in the related art, an external item needed by a user needs to be repackaged before being placed in the vehicle for carrying, which not only cannot fix various carried items, but also is inconvenient for the user to access at any time, thereby reducing user experience.

### SUMMARY

In view of this, embodiments of the present disclosure provide a console, a console assembly, and a vehicle, to meet a multifunctional requirement of the console and stably lock a portable load.

Embodiments of the present disclosure in a first aspect provide a console, applied to a vehicle having an X direction, a Y direction, and a Z direction, the console including: a console body having a bearing surface configured to bear a portable load; and a first locking structure and a second locking structure, both disposed on the console body and detachably connected to the portable load; where the first locking structure is configured to limit a degree of freedom of the portable load in the X direction and/or the Y direction, and the second locking structure is configured to limit a degree of freedom of the portable load in the Z direction.

According to the embodiments of the present disclosure in the first aspect, at least the following beneficial effects are achieved.

Under the cooperation of the first locking structure and the second locking structure, the portable load is locked in at least two directions, and even if the vehicle is shaking, the portable load can be stably locked on the bearing surface without moving frontward and rearward, left and right, and up and down in the vehicle, so as to be stably locked between the driver's seat and the front passenger seat. At this time, users in the driver's seat and the front passenger seat can operate the portable load conveniently at any time, and open a first storage space to pick and place items, so as to provide a vehicle use environment satisfying corresponding requirements, and provide a console with diversified functions.

In some embodiments, the first locking structure is configured to limit the degree of freedom of the portable load in the X direction, and the console further includes a third locking structure configured to limit the degrees of freedom of the portable load in the X direction and the Y direction; the first locking structure has a first limiting member, the second locking structure has a second limiting member, and the third locking structure has a third limiting member; and the first limiting member and the third limiting member are in limiting connection with opposite sides of the portable load along the X direction, the first limiting member and the third limiting member are both movably matched with the portable load along the Z direction, and the second limiting member is in limiting connection with the portable load along the Z direction.

In some embodiments, the console body includes a housing component having a first assembly cavity, and the bearing surface is disposed on a side of the housing component facing away from the first assembly cavity; and the first limiting member and the second limiting member are both configured to extend out of the first assembly cavity from a side of the bearing surface when subjected to an external force.

In some embodiments, the console body further includes an armrest box disposed on a side of the housing component in the X direction, with a second storage space formed inside the armrest box, and the armrest box and the housing component define a load space in communication with the bearing surface; the third locking structure is disposed in the second storage space, and the third limiting member extends from the second storage space to the load space; and the third limiting member is configured to move in the Z direction when subjected to an external force to lock or unlock the portable load.

In some embodiments, the housing component includes a top cover and a front panel, the armrest box includes a rear panel, the front panel and the rear panel are connected to the top cover at an angle and are disposed on opposite sides of the top cover in the X direction, and a side of the top cover forms the bearing surface; and the first limiting member and the second limiting member are configured to extend from the top cover to the load space along the Z direction when subjected to the external force, the first limiting member is located on a side of the top cover close to the front panel, and the third limiting member extends from the rear panel to the load space along the X direction.

In some embodiments, the first locking structure includes a driving component and a limiting component, the limiting component includes a first limiting member, the driving component includes a first operating member and a transmission component, the transmission component is disposed in the housing component, the first operating member is located in the load space, an end of the first operating member passes through the top cover and is drivingly connected to the transmission component, and the transmission component is drivingly connected to the limiting component; where the first limiting member has an unlocked position in which the first limiting member is located in the housing component and a locked position in which the first limiting member partially extends to the load space, and the first operating member is configured to rotate in different circumferential directions relative to the top cover under force, so as to drive the first limiting member to switch between the unlocked position and the locked position through the transmission component.

In some embodiments, the limiting component further includes a connecting portion, the top cover has a second access opening directly opposite to the limiting portion along the Z direction, and the transmission component is drivingly connected to the connecting portion; and the first operating member rotates and drives the transmission component to rotate, so as to drive the first limiting member to extend out of the second access opening or retract into the housing component.

In some embodiments, the transmission component includes a first transmission wheel and a transmission shaft, the first operating member is connected to an axial end of the first transmission wheel, the first transmission wheel is drivingly connected to the transmission shaft, and the transmission shaft is connected to the connecting portion; and the first operating member rotates and drives the first transmission wheel to rotate, and the first transmission wheel drives the transmission shaft to rotate to drive the limiting portion to move in an axial direction of the transmission shaft.

In some embodiments, the transmission component further includes a second transmission wheel and a third transmission wheel, the first transmission wheel is in gear transmission with the second transmission wheel, the second transmission wheel is in gear transmission with the third transmission wheel, and the third transmission wheel is in gear transmission with the transmission shaft; and the first transmission wheel drives the transmission shaft to rotate through the second transmission wheel and the third transmission wheel, the first transmission wheel includes a gear with an outer diameter greater than that of a gear of the second transmission wheel, and the outer diameter of the gear of the second transmission wheel is greater than an outer diameter of a gear of the third transmission wheel.

In some embodiments, the connecting portion is sleeved on an outer periphery of the transmission shaft; and
the first locking structure includes a guide portion extending in an axial direction of the transmission shaft, and the limiting portion is slidably connected to the guide portion.

In some embodiments, the second locking structure includes a connecting component and a second reset member, and the top cover includes a central cover plate;
the central cover plate has the second access opening, the second reset member is elastically connected between the central cover plate and the body, the connecting component is disposed in the housing component and includes a body and a second limiting member, and the second limiting member is disposed on a side of the body and protrudes from the body;
where the central cover plate has a loading position and an initial position, when the central cover plate is in the loading position, an end of the second limiting member passes through the second access opening to protrude from the bearing surface, and when the central cover plate is in the initial position, the second limiting member does not protrude beyond the bearing surface along a direction from the body to the central cover plate; and
the central cover plate is capable of moving relative to the body from the initial position to the loading position under force, and drives the first reset member to deform and accumulates an elastic restoring force that drives the central cover plate to reset to the initial position.

In some embodiments, the top cover further includes an edge plate disposed around an outer periphery of the central cover plate, surfaces of the central cover plate and the edge plate facing the same side together form the bearing surface, and an end of the edge plate is connected to the front panel at an angle; and
the first limiting member is configured to extend from the edge plate to the load space in the Z direction when subjected to an external force, and the first limiting member is located on a side of the edge plate close to the front panel.

In some embodiments, when the central cover plate is in the initial position, an outer edge of the central cover plate abuts against the body and defines a second assembly cavity together with the connecting component; and
the body has a second bottom plate directly opposite to the central cover plate, the central cover plate is configured to move toward a side close to the second bottom plate under gravity of the portable load, such that an end of the second limiting member extends out of the second assembly cavity from the second access opening.

In some embodiments, the second limiting member has a first surface facing away from the body, and the first surface extends beyond the bearing surface when the central cover plate is in the loading position; and
the first surface and the bearing surface are coplanar when the central cover plate is in the initial position.

In some embodiments, when the central cover plate is in the loading position, a portion of the second limiting member protruding from the bearing surface defines a snap-fit space together with the bearing surface; and
the snap-fit space allows a portion of the portable load to enter along the X direction and be snap-fit with the second limiting member.

In some embodiments, the third locking structure includes a mounting frame, a locking component, a second operating member, and a third reset member, the mounting frame is connected to the housing component, the locking component is movably disposed on the mounting frame along the Z direction, the second operating member is movably disposed on the mounting frame along the X direction, and the third reset member is elastically connected between the locking component and the mounting frame;
where the locking component has a locked position and an unlocked position in the Z direction, and when the locking component is in the locked position, the locking component is capable of moving to the unlocked position along the Z direction under an external force; and
when the locking component is in the unlocked position, the second operating member is in limiting fit with the locking component along the Z direction, and the second operating member is capable of moving relative to the locking component along the X direction under the external force until the second operating member and the locking component achieve positional avoidance in the Z direction, and the third reset member drives the locking component to reset to the locked position.

In some embodiments, the second operating member includes a first fitting portion, the locking component includes a second fitting portion, and when the locking component is in the unlocked position, the first fitting portion is in limiting fit with the second fitting portion along the Z direction, and the third reset member accumulates an elastic restoring force configured to reset the locking component to the locked position; and
the second operating member is capable of driving the first fitting portion to move along the X direction until the first fitting portion and the second fitting portion achieve positional avoidance in the Z direction, and the third reset member releases the elastic restoring force.

In some embodiments, the first fitting portion has a first abutting surface, and the second fitting portion has a second abutting surface;
when the locking component is in the unlocked position, the second abutting surface at least partially abuts against the first abutting surface along the Z direction; and
the second operating member is configured to drive the first fitting portion to move along the X direction under an external force until the first abutting surface and the second abutting surface achieve positional avoidance in the Z direction.

In some embodiments, the third locking structure further includes a third reset member elastically connected between the mounting frame and the second operating member along the X direction.

In some embodiments, the locking component further includes a third operating member disposed in the armrest box; and
the third operating member is connected to the third limiting member, the third operating member is movably disposed on the mounting frame along the Z direction and is connected to the third limiting member, and the third operating member is capable of driving the third limiting member to move to the unlocked position in the Z direction under an external force.

In some embodiments, the third locking structure includes a hidden housing sleeved outside the mounting frame and having a third access opening; and
when the locking component is in the unlocked position, the third limiting member extends out of the third access opening, and when the locking component is in the unlocked position, the third limiting member is located in the hidden housing.

Embodiments of the present disclosure in a second aspect provide a console assembly including a portable load and the console according to any one of the embodiments described above, the portable load being detachably connected to the console body, and the portable load having a first storage space therein.

Embodiments of the present disclosure in a third aspect provide a vehicle including a vehicle body and the console according to the second aspect, where the console assembly is disposed on the vehicle body.

Additional features and advantages of the embodiments of the present disclosure will be set forth in the description which follows, and in part will be apparent from the description, or may be learned by practice of the present disclosure. The objectives and other advantages of the embodiments of the present disclosure can be achieved and obtained by the structures particularly pointed out in the description, claims, and accompanying drawings.

### BRIEF DESCRIPTION OF DRAWINGS

FIG. 1 is a schematic structural diagram of a vehicle provided by embodiments of the present disclosure;
FIG. 2 is a schematic structural diagram of a console assembly provided by embodiments of the present disclosure;
FIG. 3 is a schematic perspective view of a partial structure of a console provided by embodiments of the present disclosure;
FIG. 4 is a schematic perspective view of a structure of the console in FIG. 3;
FIG. 5 is a schematic perspective view of a structure of the console in FIG. 3 in another state;
FIG. 6 is a schematic structural diagram of a portable load in the console assembly in FIG. 2;
FIG. 7 is a schematic cross-sectional view of a first locking structure provided by embodiments of the present disclosure in a first state;
FIG. 8 is a schematic cross-sectional view of the first locking structure in FIG. 7 in a second state;
FIG. 9 is a schematic exploded view of the first locking structure in FIG. 7;
FIG. 10 is a schematic structural diagram of a cup sleeve component of the first locking structure in FIG. 7 in a horizontal state;
FIG. 11 is a schematic structural diagram of a cup sleeve component of the first locking structure in FIG. 7 in a vertical state;
FIG. 12 is a schematic structural diagram of a cup sleeve component of the console in FIG. 3;
FIG. 13 is a schematic exploded view of a second locking structure provided by embodiments of the present disclosure;
FIG. 14 is a schematic structural diagram of a cover plate of the second locking structure in FIG. 13;
FIG. 15 is a schematic enlarged view of part A in FIG. 13;
FIG. 16 is a schematic enlarged view of part B in FIG. 13;
FIG. 17 is a schematic enlarged view of part D in FIG. 5;
FIG. 18 is a schematic exploded view of a third locking structure provided by embodiments of the present disclosure;
FIG. 19 is a schematic structural diagram of a locking component of the locking structure in FIG. 18 in a locked position;
FIG. 20 is a schematic structural diagram of a locking component of the locking structure in FIG. 18 in an unlocked position;
FIG. 21 is a schematic structural diagram of cooperation between a second operating member and a locking component of the locking structure in FIG. 18;
FIG. 22 is a schematic perspective view of a structure of a second operating member of the locking structure in FIG. 18;
FIG. 23 is a schematic structural diagram of a locking component of the locking structure in FIG. 18 in an unlocked position;
FIG. 24 is a schematic structural diagram of the locking structure in FIG. 18, in which a locking component avoids a second operating member;
FIG. 25 is a schematic diagram of a part of the locking structure in FIG. 18;
FIG. 26 is a schematic structural diagram of a mounting frame of the locking structure in FIG. 18;
FIG. 27 is a schematic structural diagram of a third locking structure provided by another embodiment of the present disclosure in a first state; and
FIG. 28 is a schematic structural diagram of the third locking structure in FIG. 27 in a second state.

### Reference numerals:

1000, vehicle;
100A, console assembly; 100, console; 200, portable load; 210, first side surface; 220, second side surface; 230, third side surface; 240, first locking fitting portion; 250, second locking fitting portion; 260, third locking fitting portion;
10, console body; 11, housing component; 111, top cover; 111a, cover plate; 111b, edge plate; 111c, bearing surface; 1111, first access opening; 1112, second through opening; 1113, cup holder area; 1114, second access opening; 1115, first guide post; 112, front panel; 13, first assembly cavity; 12, armrest box; 121, rear panel; 122, armrest case; 123, armrest cover; 125, load space;
20, first locking structure; 21, assembly housing; 211, upper assembly housing; 2111, top plate; 2112, second side wall; 211a, fourth access opening; 211b, first through opening; 212, lower assembly housing; 2121, first bottom plate; 2122, first side wall; 213, third assembly cavity; 22, driving component; 221, first operating member; 222, transmission component; 2221, first transmission wheel; 2222, transmission shaft; 2223, second transmission wheel; 2224, third transmission wheel; 23, limiting component; 231, first limiting member; 232, connecting portion; 24, first guide portion; 25, first reset member;
30, second locking structure; 31, connecting component; 311, body; 3111, second bottom plate; 312, second limiting member; 3121, connecting end; 3122, free end; 3122a, first surface; 3123, fifth access opening; 32, second reset member; 33, snap-fit space;
40, third locking structure; 41, mounting frame; 411, first frame body; 4111, fourth assembly cavity; 412, second frame body; 4121, fifth assembly cavity; 4122, sixth access opening; 4123, through hole; 42, second operating member; 421, first fitting portion; 4211, first abutting surface; 4212, locking space; 43, locking component; 431, third limiting member; 4311, locking portion; 4312, second guide post; 432, third operating member; 4322, third guide post; 4321, abutting portion; 433, second fitting portion; 4331, second abutting surface; 44, third reset member; 45, fourth reset member; 46, hidden housing; 461, third access opening;
50, cup sleeve component; 51, cup cavity;
200, portable load; 210, first side surface; 220, second side surface; 230, third side surface; 240, first locking fitting portion; 250, second locking fitting portion; 260, third locking fitting portion.

### DETAILED DESCRIPTION

To make the objectives, technical solutions, and advantages of embodiments of the present disclosure clearer and more understandable, the present disclosure will be further described in detail below with reference to the accompanying drawings and the embodiments. It should be understood that the specific embodiments described herein are only used to explain the present disclosure and are not intended to limit the present disclosure. Furthermore, the features, operations, or characteristics described herein may be combined in any suitable manner to form various embodiments. Meanwhile, the steps or actions in the method description may also be reordered or adjusted in a manner obvious to those skilled in the art. Accordingly, the various sequences in the specification and accompanying drawings are merely for the purpose of clearly describing a certain embodiment and are not meant to be required sequences, unless otherwise indicated that a certain sequence must be followed.

In the description of the embodiments of the present disclosure, "a number of" means one or more, "a plurality of" means two or more, "greater than", "less than", "more than", etc. are understood as excluding the number, and "above", "below", "within", etc. are understood as including the number. If there is a description of "first" and "second", it is only for the purpose of distinguishing between technical features, and cannot be understood as indicating or implying relative importance, implicitly indicating the number of indicated technical features, or implicitly indicating the order of the indicated technical features.

The serial numbers themselves, such as "first" and "second", are used herein only to distinguish between the described objects, and do not have any order or technical meaning. The terms "connected" and "coupled" mentioned in the present disclosure include direct and indirect connections (coupling) unless otherwise specified.

In the description of the embodiments of the present disclosure, unless otherwise clearly defined, words such as "dispose", "mount", and "connect" should be understood in a broad sense, and those skilled in the art can reasonably determine the specific meanings of the above words in the present disclosure in combination with the specific contents of the technical solutions.

Users generally use vehicles for short-distance or long-distance travel or goods transportation. Depending on different user groups and environments, the users seated in the driver's cab may have a variety of different needs, such as wearing make-up, playing games, camping, reading, or obtaining cold drinks inside the vehicle. Accordingly, wearing make-up requires carrying a makeup case, playing games requires carrying relevant game support equipment, camping requires carrying various small items, reading requires carrying books or electronic devices, and obtaining cold drinks requires carrying a small refrigerator, etc. However, in the related art, an external load required by a user needs to be repackaged before placed in the vehicle for carrying out. Moreover, the vehicle cannot fix the external load carried by the user in place. As a result, while the vehicle is in motion, not only is it inconvenient for the user to use the external load at any time, but the external load may also move within the driver's cab due to forces, thereby reducing the overall user experience.

In view of this, the present disclosure provides a console 100 of a vehicle 1000. The console 100, as an important component inside the vehicle 1000, is connected to a body panel, and is disposed between the driver's seat and the front passenger seat. The console 100 is configured to carry a gear shifting mechanism, support an arm of the user, and the like, and provides a decorative effect.

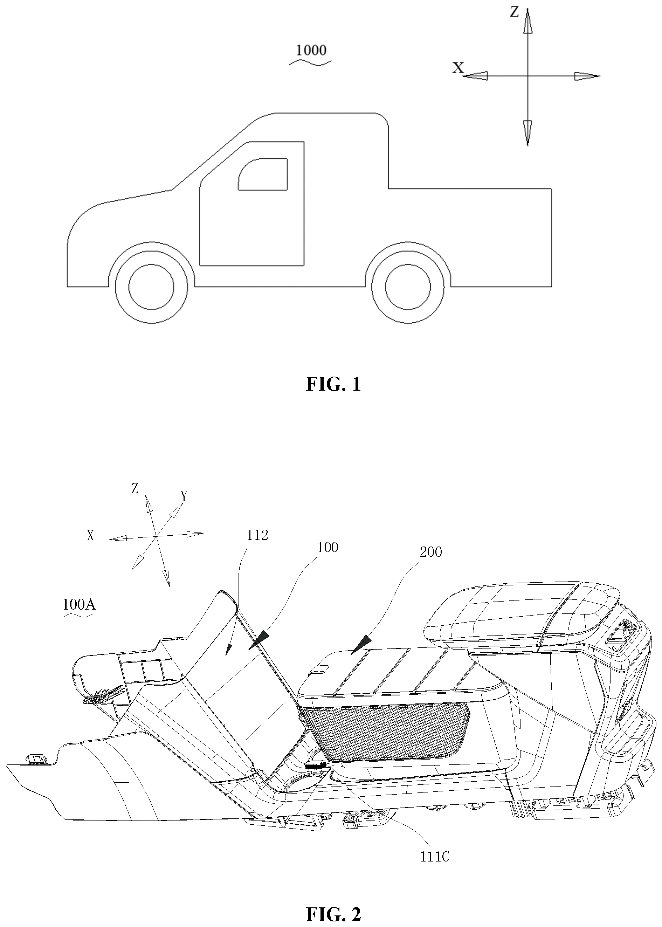

Referring to FIG 1, FIG. 1 is a schematic structural diagram of a vehicle 1000 provided by some embodiments of the present disclosure. The vehicle 1000 may be a private vehicle, such as a car, an SUV, an MPV, or a pickup truck. The vehicle 1000 may alternatively be a commercial vehicle, such as a van, a bus, a minivan, or a large trailer. The vehicle 1000 may be a fuel vehicle or a new energy vehicle. When the vehicle 1000 is the new energy vehicle, it may be a hybrid vehicle or a pure electric vehicle.

The O-XYZ coordinate system of the vehicle 1000 in the present disclosure is illustrated in conjunction with FIG. 1 and FIG. 2. The orientations such as upper, lower, front, rear, left, and right involved hereinafter are all based on the O-XYZ coordinate system of the vehicle 1000. The origin O coincides with the center of mass of the vehicle 1000. The X direction extends parallel to the ground, with the front end pointing forward and the rear end pointing rearward. The Y direction extends parallel to the ground, with the left side pointing to the left of the driver and the right side pointing to the right of the driver. The Z direction passes through the origin O, with the upper end pointing upward and the lower end pointing downward.

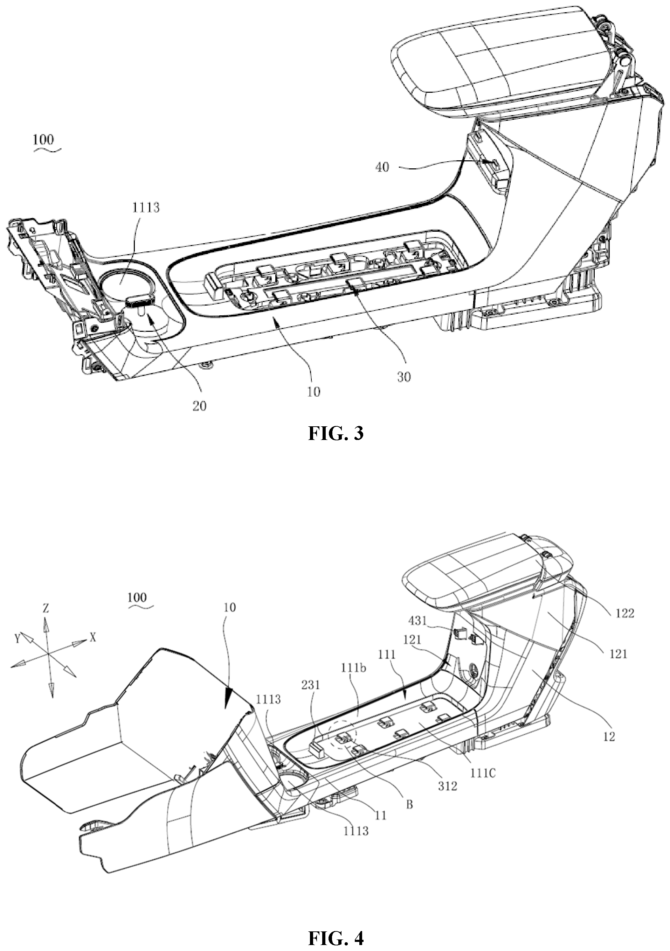

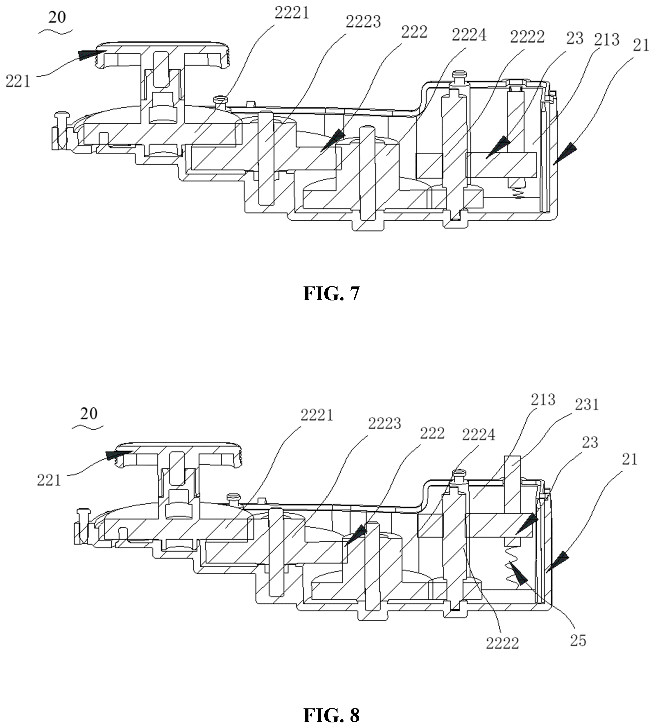

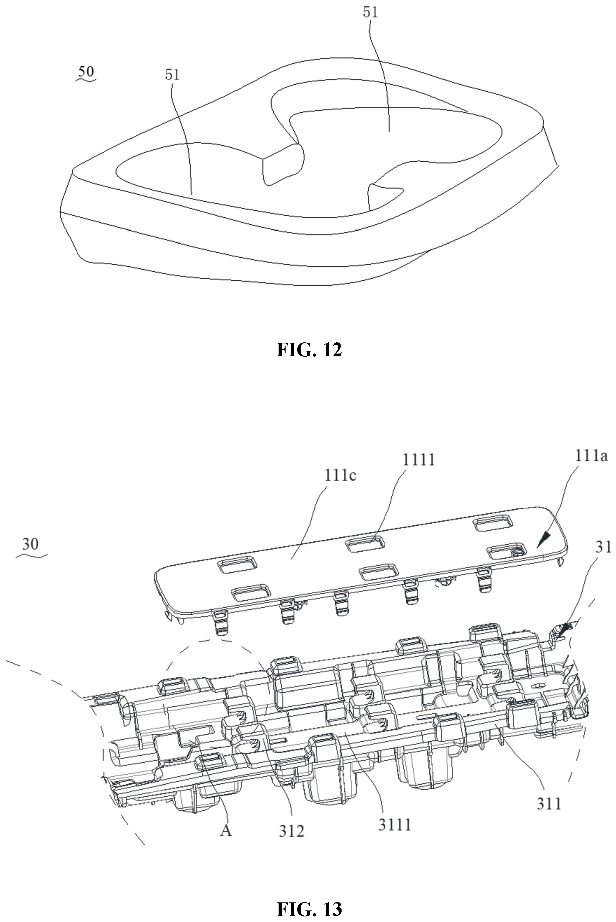

The console 100 is disposed inside the vehicle 1000, thus the X direction of the vehicle 1000 is the X direction of the console 100, the Y direction of the vehicle 1000 is the Y direction of the console 100, and the Z direction of the vehicle 1000 is the Z direction of the console 100. Specifically, referring to FIG. 3, the console 100 includes a console body 10, a first locking structure 20, and a second locking structure 30. FIG. 7 illustrates the first locking structure 20, and FIG. 13 illustrates the second locking structure 30. Referring to FIGS. 3 to 6, the console body 10 has a bearing surface 111c, which is configured to bear a portable load 200. The portable load 200 has a first storage space therein. The first locking structure 20 and the second locking structure 30 are both disposed on the console body 10, and the first locking structure 20 and the second locking structure 30 are both detachably connected to the portable load 200. The first locking structure 20 is configured to limit a degree of freedom of the portable load 200 in the X direction and/or the Y direction, and the second locking structure 30 is configured to limit a degree of freedom of the portable load 200 in the Z direction of the vehicle.

The portable load 200 is a general term for a structure. On the one hand, the portable load 200 has a portable function. Both the first locking structure 20 and the second locking structure 30 can be detachably connected to the portable load 200, that is, the portable load 200 can be detachably connected to the console body 10, so that when a user needs to carry an external load, the portable load 200 can be assembled onto the bearing surface 111c of the console body 10, and when the user does not need to carry the external load, the portable load 200 can be removed from the vehicle 1000. On the other hand, the portable load 200 has the function of carrying the external load, which, for example, can be the above-mentioned structure such as the refrigerator, the storage box, the makeup case, or the game island, so as to carry various desired external loads within the first storage space therein. With the arrangement of the portable load 200, a "dynamic island" structure is formed, allowing the user to flexibly select different types of portable loads 200, thereby meeting different requirements.

The bearing surface 111c is located on a surface of the console 100 that faces the interior of the vehicle 1000, and when the right hand of the primary driver is placed downward, the primary driver may directly contact the bearing surface 111c. That is, the bearing surface 111c forms an appearance surface of the console 100 on a side thereof, to form a local interior structure of the vehicle 1000 together with other structures. In addition, the bearing surface 111c is a flat and horizontal surface, or the bearing surface 111c may be a flat and inclined surface, or may be a non-flat surface, which needs to be set according to the specific structure and shape of the side surface of the portable load 200 abutting against the bearing surface 111c, and is not limited in the present disclosure.

Specifically, in a non-fixed state of the portable load 200 placed on the bearing surface 111c, as the vehicle 1000 moves, the portable load 200 is subjected to forces with three degrees of freedom, that is, along the front-rear direction of the vehicle 1000, along the left-right direction of the vehicle 1000, and along the up-down direction of the vehicle 1000. Therefore, if the vehicle 1000 shakes, the portable load 200 will change its position within the vehicle 1000, thereby affecting the user.

Therefore, in order to fix the portable load 200 in place, the first locking structure 20 and the second locking structure 30 jointly lock the portable load 200 in at least two directions. Specifically, the first locking structure 20, when connected to the portable load 200, limits the degree of freedom of the portable load 200 in the X direction, the Y direction, or both the X direction and the Y direction, so that the portable load 200 cannot move forward and rearward along the X direction and/or cannot move left and right along the Y direction. The second locking structure 30, when connected to the portable load 200, limits a free end 3122 of the portable load 200 in the Z direction, so that the portable load 200 cannot move up and down along the Z direction.

In this way, under the cooperation of the first locking structure 20 and the second locking structure 30, the portable load 200 is locked in multiple directions, and even if the vehicle 1000 shakes, the portable load 200 can be stably locked on the bearing surface 111c without moving forward, rearward, left, right, up and down within the vehicle 1000, so as to be stably locked between the driver's seat and the front passenger seat. In this case, users in the driver's seat and the front passenger seat can conveniently operate the portable load 200 at any time, and open the first storage space to pick up or place items, so as to provide the vehicle 1000 with a usage environment that meets corresponding requirements, and provide the console 100 with diversified functions.

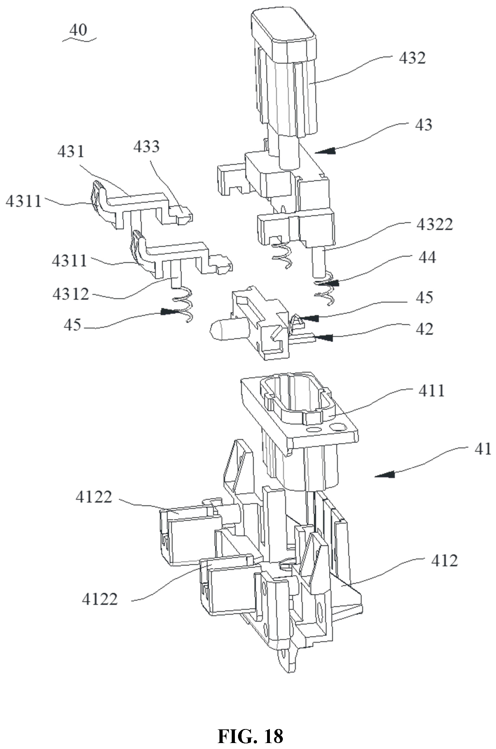

In one of the embodiments, the first locking structure is configured to limit the degree of freedom of the portable load 200 in the X direction. The console 100 further includes a third locking structure 40. FIG. 18 illustrates the third locking structure 40 configured to limit the degrees of freedom of the portable load 200 in the X direction and the Y direction. As shown in FIG. 4, the first locking structure 20 has a first limiting member 231, the second locking structure 30 has a second limiting member 312, and the third locking structure 40 has a third limiting member 431. The first limiting member 231 and the third limiting member 431 are in limiting connection with two opposite sides of the portable load 200 along the X direction, and the first limiting member 231 and the third limiting member 431 are both movably matched with the portable load 200 along the Z direction. The second limiting member 312 is in limiting connection with the portable load 200 along the Z direction.

Specifically, the bearing surface 111c is disposed below the portable load 200 in the Z direction. The second locking structure 30 limits the degree of freedom of the portable load 200 disposed on the bearing surface 111c in the Z direction, which mainly limits the upward movement of the portable load 200 relative to the bearing surface 111c, and at this time, the portable load 200 can move forward or rearward along the X direction. Therefore, in order to more reliably lock the portable load 200, the second locking structure 30 and the third locking structure 40 are in limiting connection with two opposite sides of the portable load 200 along the X direction, so that one of the second locking structure 30 and the third locking structure 40 is configured to limit the forward movement of the portable load 200, and the other is configured to limit the rearward movement of the portable load 200.

Meanwhile, when the first locking structure 20 and the third locking structure 40 lock the portable load 200, the first limiting member 231 of the first locking structure 20 and the third limiting member 431 of the third locking structure 40 extend into the portable load 200 along the Z direction. When the first locking structure 20 and the third locking structure 40 do not lock the portable load 200, the first limiting member 231 and the third limiting member 431 are separated from the portable load 200 along the Z direction. In other words, without considering the second locking structure 30, if the first limiting member 231 and the third limiting member 431 are locked with the portable load 200, the portable load 200 can move upward along the Z direction relative to the bearing surface 111c, but cannot move along the X direction or the Y direction, so that the first locking structure 20 and the third locking structure 40 can be configured to realize dual locking of the portable load 200 in the X direction and the Y direction.

In this case, the second limiting member 312 of the second locking structure 30 is in limiting connection with the portable load 200 along the Z direction, to limit movement of the portable load 200 in the Z direction relative to the console, thereby realizing triple locking of the portable load 200.

It can be understood that the first limiting member 231, the second limiting member 312, and the third limiting member 431 are direct parts where the first locking structure 20, the second locking structure 30, and the third locking structure 40 are connected to the portable load 200, and correspondingly, the portable load 200 has a first locking fitting portion 240, a second locking fitting portion 250, and a third locking fitting portion 260.

In one of the embodiments, the console body 10 includes a housing component 11, which has a first assembly cavity 13. The bearing surface 111c is disposed on a side of the housing component 11 away from the first assembly cavity 13. The first limiting member 231 and the second limiting member 312 are both configured to extend out of the first assembly cavity 13 from a side of the bearing surface 111c when subjected to an external force, so as to lock the portable load 200.

When neither the first locking structure 20 nor the second locking structure 30 locks the portable load 200, the first locking structure 20 and the second locking structure 30 may be located entirely within the housing component 11 or located at least partially within the housing component 11 to form a hidden lock. That is, when the user does not need to use the portable load 200, the first limiting member 231 and the second limiting member 312 are invisible inside the vehicle 1000, thereby ensuring the structural flatness of the interior of the vehicle 1000.

When the portable load 200 needs to be locked by the first locking structure 20 and the second locking structure 30, the first locking structure 20 and the second locking structure 30 are subjected to the external force. At this time, the first limiting member 231 of the first locking structure 20 extends out of the first assembly cavity 13 from a side of the bearing surface 111c to realize the limiting connection of the portable load 200 in the X direction, and the second limiting member 312 of the second locking structure 30 extends out of the first assembly cavity 13 from a side of the bearing surface 111c to realize the limiting connection of the portable load 200 in the Z direction.

When the portable load 200 needs to be locked by the third locking structure 40, the third limiting member 431 of the third locking structure 40 is correspondingly in limiting connection with the portable load 200 in the X direction and the Y direction.

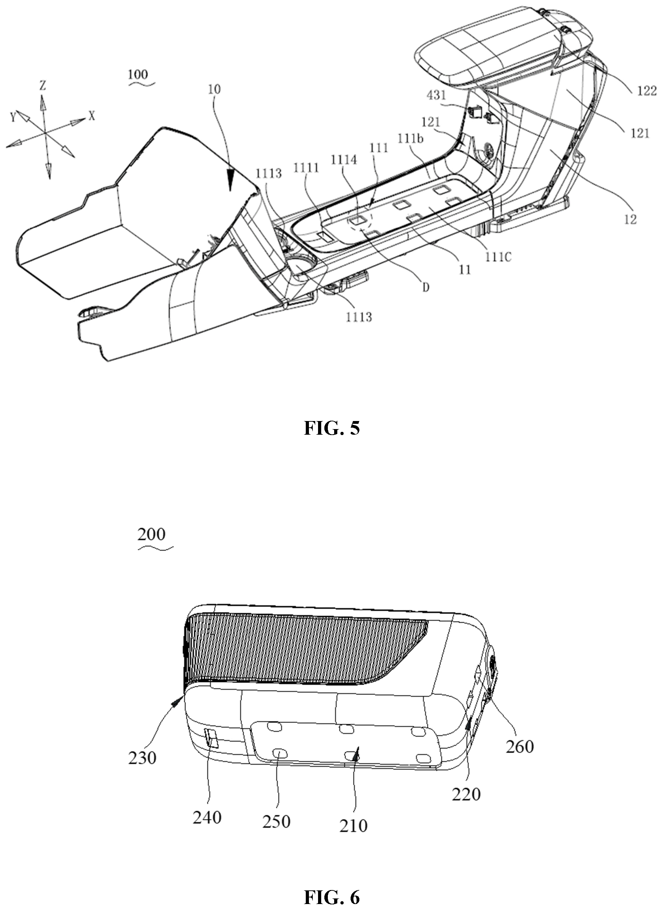

Correspondingly, as shown in FIGS. 4 and 5, the housing component 11 needs to be provided with a first access opening 1111 and a second access opening 1114 to facilitate the extension and retraction of the first limiting member 231 and the second limiting member 312.

In one of the embodiments, as shown in FIG. 5, the console 100 further includes an armrest box 12. The armrest box 12 is disposed on a side of the housing component 11 in the X direction, and a second storage space is defined inside the armrest box 12. The armrest box 12 and the housing component 11 define a load space 125 in communication with the bearing surface 111c. The third locking structure 40 is disposed in the second storage space, and the third limiting member 431 extends from the second storage space to the load space 125, and is configured to move along the Z direction when subjected to the external force to lock or unlock the portable load 200.

The armrest box 12 is provided on the right-hand side of the primary driver, and can be configured to support the arm of the driver. The armrest box 12 has the second storage space therein capable of storing certain items. In order to facilitate storage and retrieval, the armrest box 12 generally has an armrest case 122 and a movable armrest cover 123, where the armrest cover 123 can slide relative to the armrest case 122, thereby opening or closing the second storage space inside the armrest box 122.

In an example, the third locking structure 40 of the present disclosure is positioned and assembled by using the structure of the armrest box 12. The third locking structure 40 is assembled in the armrest box 12, and extends the third limiting member 431 connected to the portable load 200 out of the second storage space for connection with the portable load 200 in the load space 125. Specifically, the third limiting member 431, when subjected to the external force, can move along the Z direction close to the portable load 200, so as to lock the portable load 200, or the third limiting member 431, when subjected to the external force, can move along the Z direction away from the portable load 200, so as to unlock the portable load 200.

Specifically, the housing component 11 includes a top cover 111 and a front panel 112, and the armrest box 12 includes a rear panel 121, where the front panel 112 and the rear panel 121 are connected to the top cover 111 at an angle and are disposed on two opposite sides of the top cover 111 in the X direction, and a side of the top cover 111 forms the bearing surface 111c. The first limiting member 231 and the second limiting member 312 are configured to extend from the top cover 111 to the load space 125 along the Z direction when subjected to the external force. The first limiting member 231 is located on a side of the top cover 111 close to the front panel 112, and the third limiting member 431 extends from the rear panel 121 to the load space 125 along the X direction.

The top cover 111 is an exterior part of the console 100. When the portable load 200 is not mounted, the user can directly see and contact the top cover 111, so that the top cover 111 forms a local exterior part of the console 100, ensuring flatness and sealing of the interior structure.

The front panel 112 is connected to the top cover 111 at an angle, which means that a surface of the front panel 112 facing the load space 125 is not coplanar with the bearing surface 111c, and similarly, the rear panel 121 is connected to the top cover 111 at an angle, which means that a surface of the rear panel 121 facing the load space 125 is not coplanar with the bearing surface 111c, so that the front panel 112, the top cover 111, and the rear panel 121 surround the portable load 200 from three directions.

In an example, when the first limiting member 231 is subjected to the external force, the first limiting member 231 extends from the top cover 111 to the load space 125 along the Z direction to lock the portable load 200. When the second limiting member 312 is subjected to the external force, the second limiting member 312 extends from the top cover 111 to the portable space along the Z direction to lock the portable load 200. The third limiting member 431 extends from the rear panel 121 to the load space 125 along the X direction, and can move along the Z direction when subjected to the external force to lock the portable load 200. In this way, the degrees of freedom of the portable load 200 in the three directions are limited through the movement of the first limiting member 231, the second limiting member 312, and the third limiting member 431 in the Z direction.

Meanwhile, since the first limiting member 231 and the third limiting member 431 are in limiting connection with two opposite sides of the portable load 200 along the X direction, when the first limiting member 231 extends from the top cover 111, the first limiting member 231 is located on a side of the top cover 111 close to the front panel 112. In this way, the first limiting member 231 cooperates with the third limiting member 431 extending from the rear panel 121 to limit the portable load 200 from both front and rear positions along the X direction, and at the same time, the third limiting member 431 limits the portable load along the Y direction.

In this way, the portable load 200 is locked by the three locking structures, so that the portable load 200 can be fixed between the driver's seat and the front passenger seat, allowing the driver to conveniently perform storage or retrieval action with left or right hand without having to lean forward, thereby improving the driving safety rate of the vehicle 1000 to some extent. In addition, the passenger no longer needs to consider whether the storage or retrieval action may affect the driving, which helps improve the riding experience.

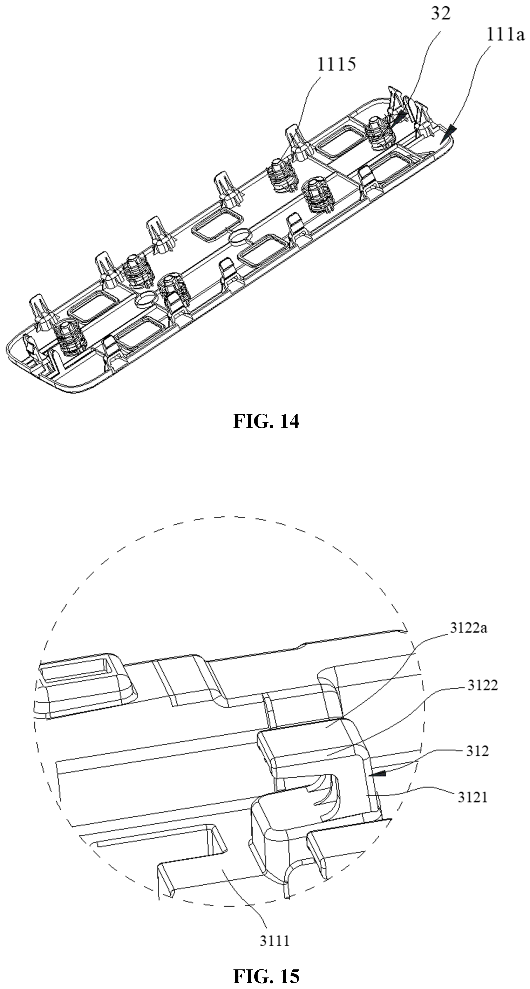

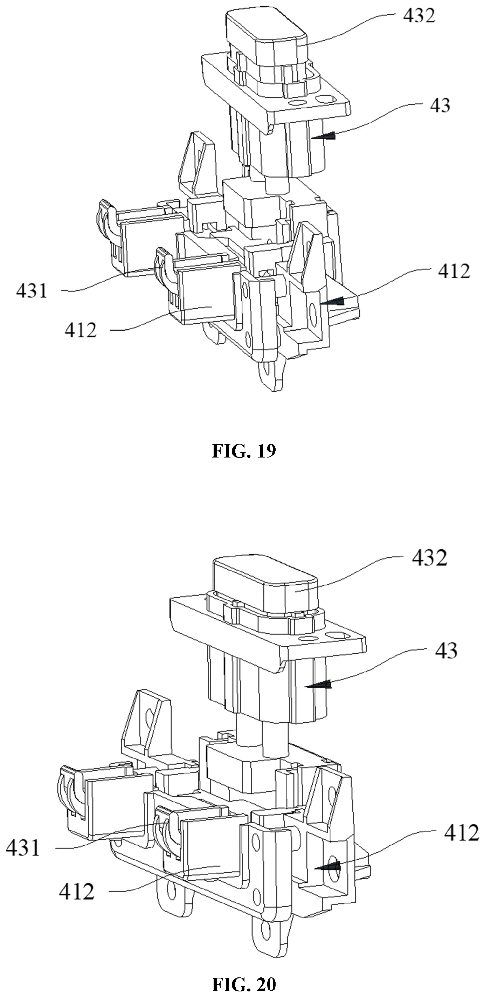

Specifically, specific locking and unlocking processes of the first locking structure 20 (FIGS. 7 to 12), the second locking structure 30 (FIGS. 13 to 17), and the third locking structure 40 (FIGS. 18 to 28) will be described below one by one.

According to a first aspect, the present disclosure provides the first locking structure 20. Referring to FIGS. 7 to 9, the first locking structure 20 includes a driving component 22 and a limiting component 23. The limiting component 23 includes the first limiting member 231. The driving component 22 includes a first operating member 221 and a transmission component 222. The transmission component 222 is disposed in the housing component 11, and the first operating member 221 is located in the load space 125. An end of the first operating member 221 passes through the top cover 111 and is drivingly connected to the transmission component 222, and the transmission component 222 is drivingly connected to the limiting component 23. The first limiting member 231 has a locked position in which a portion thereof located in the housing component 11 extends to the load space 125. The first operating member 221 is configured to be capable of rotating in different circumferential directions relative to the top cover 111 under force, and driving the first limiting member 231 to move between an unlocked position and the locked position through the transmission component 222.

Specifically, when the user needs to mount the portable load 200, the user places the portable load 200 on the bearing surface 111c of the top cover 111. Then, the user, above the top cover 111, controls rotation of the first operating member 221, so that the first operating member 221 rotates circumferentially relative to the top cover 111 to drive the transmission component 222 to move the limiting component 23, enabling a portion of the first limiting member 231 to extend out of the top cover 111 to switch the first limiting member 231 from the unlocked position to the locked position, thereby completing the locking of the portable load 200.

Then, if the portable load 200 needs to be removed, the user, above the top cover 111, controls the first operating member 221 to rotate circumferentially in a reverse direction, so as to retract the first limiting member 231 back into the housing component 11, and removes the portable load 200, thereby completing the mounting process and the removal process.

It can be understood that when the first operating member 221 rotates clockwise to control the first limiting member 231 to partially extend out of a side of the bearing surface 111c, the first operating member 221 rotates counterclockwise to control the first limiting member 231 to retract back into the housing component 11, and vice versa.

In this way, the first locking structure 20 of the present disclosure realizes the locking and unlocking of the portable load 200 through the rotation of the first operating member 221 by the user, which is simple and convenient to operate. There is no need to detach any other parts when mounting the portable load 200, which is simple and effort-saving.

The first operating member 221 may include a structure such as an operating knob, an operating handle, and an operating wheel, and an appearance of the first operating member 221 may be set according to an operating habit of the user, so as to facilitate the user to operate the first operating member 221 from the outside. From a perspective of the portable load 200, when the user controls the first operating member 221 to rotate in a first circumferential direction, a portion of the first limiting member 231 can be seen gradually extending out of a side of the bearing surface 111c. When the user controls the first operating member 221 to rotate in a second circumferential direction, the portion of the first limiting member 231 extending out of the bearing surface 111c can be seen gradually retracting back into the housing component 11.

In an example, the transmission component 222 of the console 100 can be entirely hidden in the housing component 11, and the entire limiting component 23 can be hidden when the portable load 200 does not need to be mounted, so that the user can only see the first operating member 221 from the outside, thereby ensuring a flat appearance.

In some embodiments, when the first limiting member 231 partially extends from a side of the bearing surface 111c to the load space 125, the first limiting member 231 can be inserted into the first locking fitting portion 240 of the portable load 200 placed on the bearing surface 111c, thereby achieving fixation between the first limiting member 231 and the portable load 200. It can be understood that the first limiting member 231 may be of a block-like structure, and the first locking fitting portion may be of a groove-like structure.

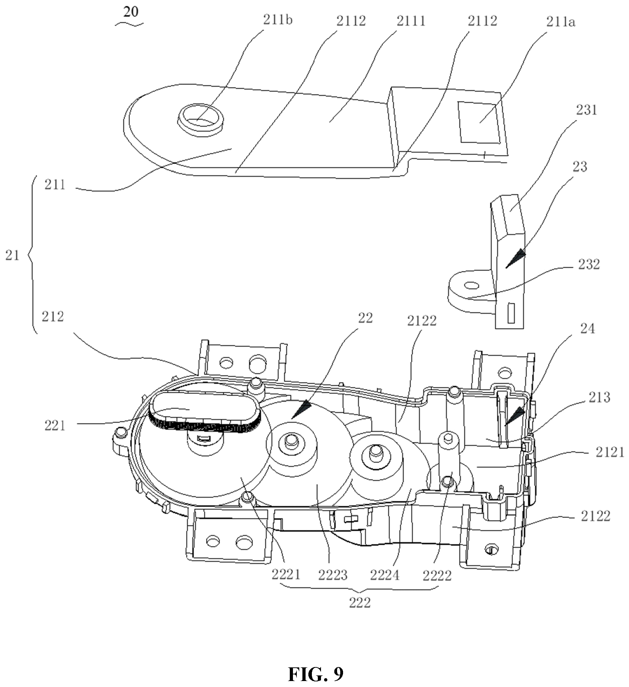

In one of the embodiments, referring to FIG. 9, the limiting component 23 further includes a connecting portion 232. The top cover 111 has the first access opening 1111 directly opposite to the first limiting member 231. The transmission component 222 is drivingly connected to the connecting portion 232, and the first operating member 221 rotates and drives the transmission component 222 to rotate, so as to drive the first limiting member 231 to extend out of the first access opening 1111 or retract back into the housing component 11.

Throughout the transmission process, the first operating member 221 rotates circumferentially under force. The rotating force is transmitted to the transmission component 222 to rotate the transmission component 222, and the rotating force is further transmitted to the first limiting member 231 and changes its direction, so that the first limiting member 231 moves linearly in an axial direction, thereby extending out of the first access opening 1111 and being fixed to the portable load 200, or retracting back into the housing component 11.

Specifically, the first operating member 221 may be connected to an axial end of the transmission component 222 for rotation, so that when the first operating member 221 is rotated, the first operating member 221 drives a transmission shaft 2222 to rotate synchronously. Alternatively, the first operating member 221 may be drivingly connected to a radial gear of the transmission component 222 for rotation, thereby realizing the transmission of the rotating force through gear transmission. Alternatively, the first operating member 221 may be connected to an axial end of a portion of the transmission component 222 to transmit the rotational movement to the transmission component 222, which is then transmitted along the radial gear inside the transmission component 222, thereby realizing transmission of the movement.

In this way, through the transmission cooperation between the transmission component 222 and the connecting portion 232, the rotational movement of the transmission shaft 2222 is converted into a linear movement of the first limiting member 231 along the axial direction of the transmission component 222, so that the first limiting member 231 extends out of the housing component 11 through the first access opening 1111 to be fixed to the portable load 200 placed on the bearing surface 111c, or retracts back into the housing component 11 through the first access opening 1111 to release the portable load 200.

Specifically, a shape of the first access opening 1111 may be rectangular, circular, etc., which needs to be adapted according to the actual size and shape of the connecting portion 232. However, it should be noted that the size of the first access opening 1111 needs to be greater than the size of the outer contour of the first limiting member 231 to ensure the normal movement of the first limiting member 231 within the first access opening 1111.

In one of the embodiments, referring to FIGS. 7 to 9, the transmission component 222 includes a first transmission wheel 2221 and the transmission shaft 2222, where the first operating member 221 is connected to an axial end of the first transmission wheel 2221, the first transmission wheel 2221 is in gear transmission with the transmission shaft 2222, and the transmission shaft 2222 is drivingly connected to the connecting portion 232. The first operating member 221 rotates and drives the first transmission wheel 2221 to rotate, and the first transmission wheel 2221 drives the transmission shaft 2222 to rotate, so as to drive the first limiting member 231 to move in the axial direction of the transmission shaft 2222 to extend out of the first access opening 1111 or retract back into the housing component 11.

Specifically, along the radial direction of the transmission shaft 2222, that is, the radial direction of the first transmission wheel 2221, an outer periphery of the transmission shaft 2222 is in gear engagement with an outer periphery of the first transmission wheel 2221. When the user rotates the first operating member 221 outside the housing component 11, that is, on a side of the load space 125, the first transmission wheel 2221 synchronously undergoes the rotational movement under force. The first transmission wheel 2221 transmits the rotational movement to the transmission shaft 2222 through gear engagement, so that the transmission shaft 2222 rotates circumferentially, and drives the first limiting member 231 to move linearly through the transmission connection with the transmission portion.

In an example, the housing component 11 has a first fixed shaft, and the first transmission wheel 2221 is rotatably sleeved on the first fixed shaft, so as to rotate relative to the first fixed shaft. The transmission shaft 2222 is rotatably connected to the housing component 11, and the specific connection manner is not limited, for example, a fixed structure may be provided on the housing component 11, and the transmission shaft 2222 is rotatably sleeved on the fixed structure.

In one of the embodiments, referring to FIGS. 7 to 9, the transmission component 222 further includes a second transmission wheel 2223 and a third transmission wheel 2224, where the first transmission wheel 2221 is in gear transmission with the second transmission wheel 2223, the second transmission wheel 2223 is in gear transmission with the third transmission wheel 2224, and the third transmission wheel 2224 is in gear transmission with the transmission shaft 2222. The first transmission wheel 2221 drives the transmission shaft 2222 to rotate through the second transmission wheel 2223 and the third transmission wheel 2224. An outer diameter of a gear of the first transmission wheel 2221 is greater than an outer diameter of a gear of the second transmission wheel 2223, and the outer diameter of the gear of the second transmission wheel 2223 is greater than an outer diameter of a gear of the third transmission wheel 2224.

Specifically, the housing component 11 includes a second fixed shaft and a third fixed shaft, where the second transmission wheel 2223 is rotatably sleeved on the second fixed shaft, and the third transmission wheel 2224 is rotatably sleeved on the third fixed shaft. When the user externally controls the first operating member 221 to rotate, the first operating member 221 can drive the first transmission wheel 2221 to rotate, the rotation of the first transmission wheel 2221 can drive the second transmission wheel 2223 to rotate, and the rotation of the second transmission wheel 2223 can drive the third transmission wheel 2224 to rotate. The third transmission wheel 2224 drives the transmission shaft 2222 to rotate circumferentially, to drive the first limiting member 231 to move up and down along the axial direction.

The outer diameter of the gear, also known as a tip circle diameter, refers to a diameter of a circle formed by tooth tips. In a descending order, the outer diameter of the gear of the first transmission wheel 2221 is greater than the outer diameter of the gear of the second transmission wheel 2223, which in turn is greater than the outer diameter of the gear of the third transmission wheel 2224. Through the gear transmission among the first transmission wheel 2221, the second transmission wheel 2223, and the third transmission wheel 2224, a small force input at the operating end can provide a large force to the first limiting member 231, enabling the first limiting member 231 to move quickly.

Specifically, the case that a large force needs to be provided to the first limiting member 231 is taken as an example. A torque of the third transmission wheel 2224 engaged with the transmission shaft 2222 is F₃*R₃, where the third transmission wheel 2224 is in the last position that directly provides the force to the first limiting member 231, a torque of the second transmission wheel 2223 is F₂*R₂, and a torque of the first transmission wheel 2221 is F₁*R₁, where F₁ is a force applied by the user. According to the principle of the transmitted torque being constant, if it is desired to achieve the minimum F₁ and the maximum F₃, R₁ is set to be greater than R₂, which in turn is set to be greater than R₃, resulting in F₁ being less than F₂, which in turn is less than F₃.

Therefore, when operating the first operating member 221, the user only needs to rotate the first transmission wheel 2221 with a small force to transmit a large force to the limiting component 23 through the transmission component 222, thereby generating a large output force through a small input force and quickly pushing the first limiting member 231 to extend out of or retract into the first access opening 1111.

In a specific embodiment, for example, the user may apply a force of 25N to the first operating member 221, thereby applying a force of 75N to the limiting component 23 to push the limiting component 23 to move. In actual application, specific sizes of the first transmission wheel 2221, the second transmission wheel 2223, and the third transmission wheel 2224 need to be set according to an actual situation, and are not limited in the present disclosure.

In one of the embodiments, the connecting portion 232 is sleeved on an outer periphery of the transmission shaft 2222. The first locking structure 20 includes a first guide portion 24 extending along the axial direction of the transmission shaft 2222, and the first limiting member 231 is slidably connected to the first guide portion 24.

The connecting portion 232 sleeved on the outer periphery of the transmission shaft 2222 is used to connect the first limiting member 231 and drive the first limiting member 231 to move on the one hand, and is used to cooperate with the transmission shaft 2222 on the other hand. The connecting portion 232 can be driven to move relative to the transmission shaft 2222 along the axial direction of the transmission shaft 2222 after being subjected to a rotational force from the transmission shaft 2222, thereby realizing the linear movement of the first limiting member 231.

Specifically, the connecting portion 232 may be of a hollow cylindrical structure, with a circumferential side wall connected to the first limiting member 231. The transmission shaft 2222 passes through an internal hollow space of the connecting portion 232, and relative movement may be generated between fitting portions of the transmission shaft 2222 and the connecting portion 232.

In an example, the transmission shaft 2222 rotates circumferentially around its own axis, so that the connecting portion 232 disposed around its outer periphery has a trend to rotate circumferentially. However, the first limiting member 231 connected to the connecting portion 232 is slidably connected to the first guide portion 24 along the axial direction of the transmission shaft 2222. Therefore, the connecting portion 232 is prevented from rotating under the restriction of the first guide portion 24, and can only generate the linear movement. Thus, when the rotational force from the transmission shaft 2222 is transmitted to the connecting portion 232, the connecting portion 232 drives the first limiting member 231 to slide relative to the first guide portion, so that the relative movement between the connecting portion 232 and the transmission shaft 2222 along the axial direction is realized through the first guide portion 24. The connecting portion 232 drives the first limiting member 231 to generate an axial displacement, enabling the first limiting member 231 to extend out of the first access opening 1111, or retract into the housing component 11.

Specifically, in some embodiments, the first guide portion 24 may be a guide groove, and the first limiting member 231 is provided with a guide protrusion. In other embodiments, the first guide portion 24 may be a guide protrusion, and the first limiting member 231 is provided with a guide groove. The guide protrusion is slidably disposed in the guide groove, so that the first limiting member 231 is movably connected to the first guide portion 24, enabling the guide protrusion to slide in the guide groove when the first limiting member 231 is subjected to a force.

It can be understood that the first limiting member 231 may be of a block-like or strip-like structure, and a portion of the first limiting member 231 extends from a side of the bearing surface 111c and passes through the bottom of the portable load 200 placed on the top cover 111, so as to be locked with the first locking fitting portion 240 of the portable load 200. The first limiting member 231 may also be of another structure, such as a hook, which is not limited in the present disclosure.

In other embodiments, the third transmission wheel 2224 may also be drivingly connected to the transmission shaft 2222 by means of a rack, thereby realizing the linear movement of the transmission shaft 2222 through the rotation of the third transmission wheel 2224. The transmission shaft 2222 moves linearly and drives the limiting component 23 to move linearly, thereby realizing the movement of the first limiting member 231 between the unlocked position and the locked position.

In one of the embodiments, the first locking structure 20 includes an assembly housing 21, where the assembly housing 21 includes an upper assembly housing 211 and a lower assembly housing 212. The first guide portion is disposed on the lower assembly housing 212, the lower assembly housing 212 has a third assembly cavity 213, and the upper assembly housing 211 covers the lower assembly housing 212 and closes the third assembly cavity 213. The first locking structure 20 further includes a first reset member 25, the lower assembly housing 212 has a first bottom plate 2121 directly opposite to the upper assembly housing 211, and the first reset member 25 is disposed between the first bottom plate 2121 and the lower assembly housing 212.

The lower assembly housing 212 may be of an integrally formed structure, or may be formed by assembling a plurality of parts. It can be understood that the lower assembly housing 212 is of a hollow shell-like structure, which itself encloses the third assembly cavity 213 and forms an opening on a side. Specifically and without limitation, the lower assembly housing 212 may be formed by assembling a first side wall 2122 and the first bottom plate 2121. The first side wall 2122 is disposed around an edge of the first bottom plate 2121 and extends toward a side, so that an opening is formed on a side of the first side wall 2122 away from the first bottom plate 2121. The upper assembly housing 211 covers the opening and has a fourth access opening 211a and a first through opening 211b in communication with the third assembly cavity 213. The top cover 111 is provided with the first access opening 1111 and a second through opening 1112, where the fourth access opening 211a is directly opposite to the first access opening 1111, and the second through opening 1112 is directly opposite to the first through opening 211b.

In actual mounting, the transmission component 222 is assembled in the lower assembly housing 212. An end of the first operating member 221 passes through the second through opening 1112 and the first through opening 211b from the load space 125 into the third assembly cavity 213, thereby realizing a transmission connection with the transmission component 222 in the third assembly cavity 213. The connecting component 31 of the limiting component 23 is disposed in the third assembly cavity 213 and is drivingly connected to the transmission component 222, so that the first limiting member 231 can extend out of the third assembly cavity 213 through the fourth access opening 211a and extend into the load space 125 through the first access opening 1111.

Specifically, the first transmission wheel 2221, the second transmission wheel 2223, the third transmission wheel 2224, the transmission shaft 2222, and the first limiting member 231 may be sequentially arranged and connected along a radial direction of the transmission shaft 2222, so as to be evenly distributed in the third assembly cavity 213 to avoid an increase in the height of the first locking structure 20.

In an example, the upper assembly housing 211 and the lower assembly housing 212 may be connected to each other by welding, snap-fit, fasteners, or the like. The upper assembly housing 211 and the lower assembly housing 212 may be plastic parts, metal parts, and other material parts. The upper assembly housing 211 may include a top plate 2111 directly opposite to the first bottom plate 2121 and a second side wall 2112 disposed around an outer edge of the top plate 2111. The second side wall 2112 may partially cover the outside of the first side wall 2122, or may directly abut against the first side wall 2122, with a sealing structure provided at the abutting position between the two. In addition, the first locking structure 20 of the present disclosure can be entirely removed from the console 100 by taking out the assembly housing 21, so that the first locking structure 20 can be mounted at other positions to achieve a locking effect.

In an example, when the first limiting member 231 is moved from the unlocked position to the locked position, it is moved from the inside of the third assembly cavity 213 to the outside of the third assembly cavity 213, and at this time, the first reset member 25 located between the first limiting member 231 and the first bottom plate 2121 is driven by the first limiting member 231 to be stretched. When the first limiting member 231 is moved from the locked position to the unlocked position, it is moved from the outside of the third assembly cavity 213 to the inside of the third assembly cavity 213, and at this time, the first reset member 25 located between the first limiting member 231 and the first bottom plate 2121 resets to provide a reset force for the first limiting member 231, thereby enabling the first operating member 221 more effort-saving.

Moreover, the arrangement of the first reset member 25 creates a buffer space between the first limiting member 231 and the first bottom plate 2121, and the arrangement of the buffer space enables the first limiting member 231 to have a certain fault tolerance during assembly or movement, thereby improving the stability and reliability thereof. Moreover, when the limiting component 23 is switched between the unlocked position and the locked position, the first reset member 25 can effectively absorb and buffer the impact force transmitted from the portable load 200 and the first operating member 221 to the first limiting member 231, thereby keeping the position of the first limiting member 231 stable without damage to the first limiting member 231. Moreover, with the arrangement of the first reset member 25, an idle stroke of the first limiting member 231 is reduced and a reset reliability of the first limiting member 231 is improved.

The first reset member 25 may be a leaf spring, a coil spring, a torsion bar spring, etc. In other embodiments, other structures may also be mounted within the third assembly cavity 213, which is not limited in the present disclosure.

In one of the embodiments, referring to FIGS. 3 to 5 and FIGS. 10 to 12, the top cover 111 is further provided with a cup holder area 1113 configured to hold a structure such as a water cup or a beverage bottle. When the user has a need for drinking while using the vehicle, the user can place the structure such as the water cup or the beverage bottle in the cup holder area 1113 for convenient use.

Specifically, a bottom of the cup holder area 1113 is positioned lower along the Z direction than the bearing surface, so that the cup holder area 1113 forms a recess on a side of the top cover 111, that is, the cup holder area 1113 has a bottom portion configured to bear the water cup and a side portion configured to limit the water cup. When the water cup is placed in the cup holder area 1113, the side portion of the cup holder area 1113 comes into contact with the side of the water cup, thereby providing anti-tip limiting for the water cup, and preventing the water cup from tipping over relative to the console 100 when the vehicle 1000 is in motion or experiencing vibration.

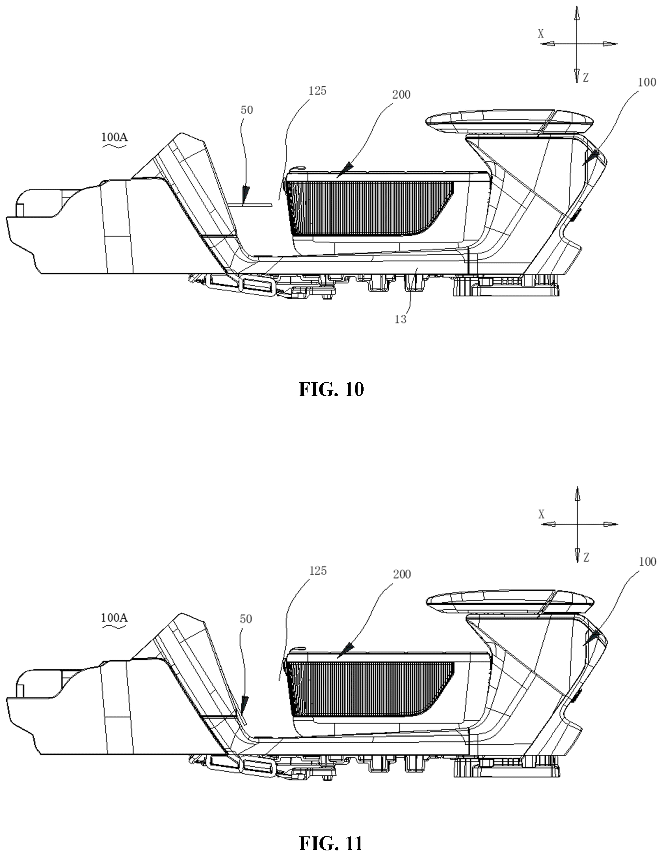

In one of the embodiments, referring to FIGS. 10 to 12, the console 100 further includes a cup sleeve component 50 rotatably connected to the housing component 11 and including two cup cavities 51. The cup sleeve component is rotatable relative to the housing component 11 to a horizontal state in which the cup cavities 51 are aligned with the cup holder area 1113, and the cup sleeve component 50 is further rotatable relative to the housing component 11 to a vertical state in which the cup cavities 51 are misaligned with the cup holder area 1113.

When the cup sleeve component 50 needs to be used, that is, when the user needs to place the water cup in the cup cavity 51, the cup sleeve component 50 provided in the present disclosure is in the horizontal state, in which the cup cavity 51 is directly aligned with the cup holder area 1113, with an upper portion of the water cup disposed in the cup cavity 51 and a bottom portion of the water cup disposed in the cup holder area 1113, so that the water cup is stably limited at various positions in the height direction of the water cup. When the cup sleeve component 50 is not needed, that is, when the user does not need to place the water cup in the cup cavity 51, the cup sleeve component 50 is controlled to rotate relative to the housing component to the vertical state, in which the cup cavity 51 is misaligned with the cup holder area 1113, at this time, there is no obstruction directly above the cup holder area 1113, and the cup sleeve component 50 is stowed in the vertical state, thereby reducing an occupied space. In an example, the number of the cup cavities 51 in the cup sleeve component 50 is equal to the number of the cup holder areas 1113, and the cup cavities 51 are disposed in one-to-one correspondence with the cup holder areas 1113, that is, one cup cavity 51 and one cup holder area 1113 are configured to limit one water cup.

It can be understood that when the cup sleeve component 50 is in the horizontal state, the cup sleeve component 50 is positioned above the cup holder area 1113 and the first operating member 221 along the Z direction, and at this time, if the user needs to apply a force to the first operating member 221 to rotate it, the user needs to avoid the cup sleeve component 50 and apply the force obliquely from the side, which is very inconvenient to operate. Therefore, when the cup sleeve component 50 is in the vertical state, there is no structural obstruction above the cup holder area 1113 and the first operating member 221, and the user can apply the force vertically directly from the above, thereby achieving convenient operation.

Specifically, when the cup sleeve component 50 needs to be switched from the horizontal state to the vertical state, the rotation of the cup sleeve component 50 relative to the housing component 11 can be achieved by the user applying a force to the cup sleeve component 50, or a driving structure can be provided between the cup sleeve component 50 and the housing component for automatic driving of the cup sleeve component 50. The specific rotational connection manner between the cup sleeve component 50 and the housing component 11 is not limited in the present disclosure.

In a specific embodiment, the cup sleeve component 50 is connected to the front panel 112. It can be understood that, the front panel 112 is in front of the human body, at a position where the user seated in the driver's seat of the vehicle 1000 can easily reach by hand. When the user does not need to use the cup sleeve component 50, the user seated in the driver's seat can directly reach forward to operate the cup sleeve component 50 without having to lean forward, so that the cup sleeve component 50 rotates relative to the front panel 112 until it fits the front panel 112 to stow the cup sleeve component 50. When the user needs to use the cup sleeve component 50, the user seated in the driver's seat can directly reach forward to operate the cup sleeve component 50 without having to lean forward, so that the cup sleeve component 50 rotates relative to the front panel 112 until it is perpendicular to the front panel 112, and the cup cavity 51 is directly aligned with the cup holder area 1113.

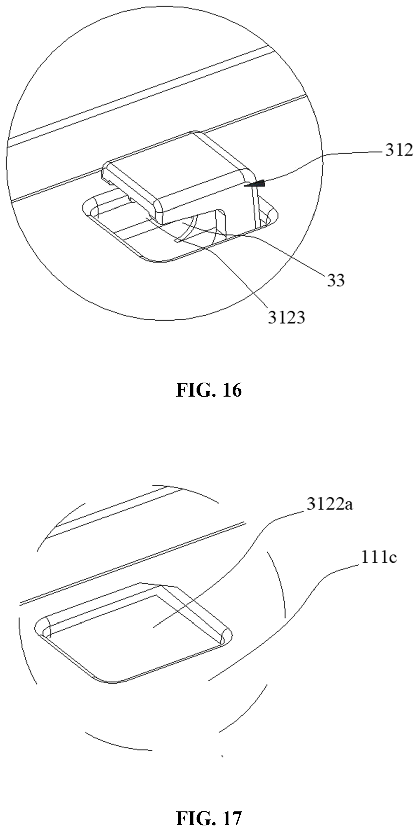

According to a second aspect, the present disclosure further provides a second locking structure 30. Referring to FIGS. 13 to 15, the second locking structure 30 includes a connecting component 31 and a second reset member 32. Referring to FIGS. 4 and 5, the top cover 111 includes a central cover plate 111a and an edge plate 111b disposed around an outer periphery of the central cover plate 111a. Surfaces of the central cover plate 111a and the edge plate 111b facing the same side jointly form the bearing surface 111c. The central cover plate 111a has a second access opening 1114 penetrating through the central cover plate 111a. The connecting component 31 is disposed in the housing component 11 and includes a body 311 and a second limiting member 312. The second limiting member 312 is disposed on a side of the body 311 and protrudes from the body 311. The second reset member 32 is elastically connected between the central cover plate 111a and the body 311. The central cover plate 111a has a loading position and an initial position. When the central cover plate 111a is in the loading position, as shown in FIG. 16, the second limiting member 312 extends out of the bearing surface 111c through the second access opening 1114 and is configured to cooperate with the portable load 200 to fix the portable load 200 on the bearing surface 111c. When the central cover plate 111a is in the initial position, as shown in FIG. 17, in a direction from the body 311 to the central cover plate 111a, the second limiting member 312 does not protrude beyond the bearing surface 111c. The central cover plate 111a can be moved relative to the body 311 from the initial position to the loading position under force, and drive the second reset member 32 to deform and accumulate an elastic restoring force that drives the central cover plate 111a to reset to the initial position.

It can be understood that the central cover plate 111a and the edge plate 111b are both a portion of the top cover 111. When the portable load 200 needs to be mounted, the portable load 200 is placed on the bearing surface 111c, and at this time, the central cover plate 111a is subjected to a force, which can come from a press by the user, or from the gravity of the portable load 200 itself, so as to move the central cover plate 111a to the loading position towards a side close to the body 311. The second limiting member 312, with an end connected to the body 311, has its another end passing through the second access opening 1114 and extending out from a side of the bearing surface 111c, at which time, it is considered that the second limiting member 312 extends out of the console 100, that is, into the load space 125, and is connected to the portable load 200 placed on the central cover plate 111a, so that the portable load 200 is fixed to the central cover plate 111a. The user cannot see the connection position between the second locking structure 30 and the portable load 200 from the inside of the vehicle or from the outside, resulting in a tidy appearance after connection and a convenient connection.

In addition, during a process in which the central cover plate 111a moves close to the body 311, the second reset member 32 connected to the central cover plate 111a is subjected to the force from the central cover plate 111a and deforms, to accumulate the elastic restoring force. The elastic restoring force always exists when the central cover plate 111a is in the loading position.

In some embodiments, the edge plate 111b is connected to the front panel 112 at an angle, and the first access opening 1111 may be disposed at a position of the edge plate 111b close to the front panel 112, so that the first limiting member 231 extends from an edge position of the top cover 111 to the load space 125, and cooperates with the third limiting member 431 located on the rear side to limit a front-rear movement degree of freedom of the portable load 200 in the X direction.

It can be understood that the second locking fitting portion 250 on the portable load 200 cooperates with the second limiting member 312 to fix the portable load 200 on the central cover plate 111a, where the cooperation manner between the second locking fitting portion 250 and the second limiting member 312 may include snap-fit, elastic connection, screw connection, etc., which is not limited in the present disclosure. In this way, it is convenient for the user to use the portable load 200 at any time when the vehicle 1000 is in motion, and the portable load 200 is stably fixed on the central cover plate 111a without displacement or shaking.

When the user needs to remove the portable load 200, first, the portable load 200 is controlled to be separated from the second limiting member 312 and move away from the central cover plate 111a. At this time, the force applied to the central cover plate 111a disappears, and the second reset member 32 resets and releases the elastic restoring force, allowing the central cover plate 111a to reset to the initial position from the loading position, after which a flat appearance surface is formed on a side of the top cover 111 facing the user.

In this way, with the console 100 of the present disclosure, the portable load 200 can be conveniently and quickly mounted when needed, and the central cover plate 111a can be quickly reset after the portable load 200 is removed, thereby ensuring the assembly while achieving the appearance flatness of the console 100.

In one of the embodiments, in the initial position, an outer edge of the central cover plate 111a abuts against the body 311 and defines a second assembly cavity together with the body 311. The body 311 has a second bottom plate 3111 directly opposite to the central cover plate 111a. The central cover plate 111a can move towards a side close to the second bottom plate 3111, and an end of the second limiting member 312 extends out of the second assembly cavity through the second access opening 1114.

The existence of the second assembly cavity provides a movement space for the movement of the central cover plate 111a. That is, when the central cover plate 111a is in the initial position, the central cover plate 111a and the body 311 enclose to define the closed second assembly cavity, at which time, the second limiting member 312 is entirely located in the second assembly cavity, or partially located in the second assembly cavity and partially located in the second access opening 1114, and the second bottom plate 3111 of the body 311 is directly opposite to the central cover plate 111a with a maximum distance therebetween in the Z direction.

When the central cover plate 111a is in the loading position, the central cover plate 111a moves towards the side close to the second bottom plate 3111, and the second assembly cavity is opened from a side of the central cover plate 111a. At this time, a portion of the second limiting member 312 extends out of the central cover plate 111a through the second access opening 1114, and the portable load 200 on the bearing surface 111c at least partially enters the second assembly cavity, thereby completing the connection between the portable load 200 and the second limiting member 312, and the second bottom plate 3111 of the body 311 is directly opposite to the central cover plate 111a with a minimum distance therebetween in the Z direction.

In one of the embodiments, the second limiting member 312 has a first surface 3122a facing away from the body 311. When the central cover plate 111a is in the initial position, the first surface 3122a is coplanar with the bearing surface 111c. When the central cover plate 111a is in the loading position, the first surface 3122a extends beyond the bearing surface 111c along a direction from the second bottom plate 3111 to the central cover plate 111a.

The first surface 3122a being coplanar with the bearing surface 111c means that when the central cover plate 111a is in the initial position, an end of the second limiting member 312 extends into the second access opening 1114 and completely closes the second access opening 1114. At this time, dust on the side of the bearing surface 111c is blocked by the first surface 3122a and cannot fall into the second access opening 1114 or enter the interior of the housing component 11 through the second access opening 1114, thereby improving the sealing effect of the console 100.

When the central cover plate 111a is moved to the loading position relative to the body 311 under force, while the position of the first surface 3122a remains unchanged, the bearing surface 111c moves downward, so that the end of the second limiting member 312 having the first surface 3122a extends out of the second access opening 1114 from a side of the bearing surface 111c, to realize the connection between the second limiting member 312 and the portable load 200.

In one of the embodiments, when the central cover plate 111a is in the loading position, a portion of the second limiting member 312 extending out of the bearing surface 111c defines a snap-fit space 33 together with the bearing surface 111c, where the snap-fit space 33 allows a portion of the portable load 200 to enter along the X direction and be snap-fit with the second limiting member 312. When a portion of the portable load 200 enters the snap-fit space 33 along the X direction, it abuts against and is limited by the second limiting member 312 along the Z direction, so that a degree of freedom of the portable load 200 in the Z direction is limited by the second limiting member 312, thereby realizing fixation.

In a specific embodiment, the second limiting member 312 includes a connecting end 3121 and a free end 3122, where an end of the connecting end 3121 is connected to the body 311, and another end of the connecting end 3121 is connected to the free end 3122 in an intersecting manner, so that the connecting end 3121 and the free end 3122 form an L-shaped hook. The portable load 200 is translated along the X direction on the bearing surface 111c when subjected to a force in the X direction, and the second locking fitting portion enters the L-shaped hook, to limit the portable load 200 along the Z direction by the free end 3122. In other words, the portable load 200 is hooked by the L-shaped hook, preventing it from detaching from the bearing surface 111c along the Z direction

When the central cover plate 111a is in the loading position, the connecting end 3121 extends through the second access opening 1114, and at least a portion of the connecting end 3121 and the free end 3122 protrude from a side of the bearing surface 111c, so as to hook the portable load 200. When the central cover plate 111a is in the initial position, the free end 3122 does not extend beyond the bearing surface 111c.

It can be understood that the first surface 3122a is formed on a side of the free end 3122 away from the connecting end 3121. When the central cover plate 111a is in the initial position, the first surface 3122a of the free end 3122 may be coplanar with the bearing surface 111c, thereby closing the second access opening 1114 and forming a flat exterior surface.

Both the connecting end 3121 and the free end 3122 may be of plate-shaped or columnar structures, which may be set according to the arrangement of the corresponding fitting portion of the portable load 200.

In other embodiments, the second limiting member 312 may have other structures, such as a connecting post structure, or an elastic snap-fit structure, which are not limited in the present disclosure.

In one of the embodiments, when the central cover plate 111a is in the loading position, the free end 3122, the connecting end 3121, and the bearing surface 111c together define a fifth access opening 3123, which is provided along the X direction and is in communication with the snap-fit space 33. A portion of the portable load 200 can enter the snap-fit space 33 along the X direction through the fifth access opening 3123 and be snap-fit with the second limiting member 312.

During the mounting of the portable load 200, firstly, the user controls the portable load 200 to be placed at a first position of the bearing surface 111c, and then, under the influence of the gravity of the portable load 200, the central cover plate 111a moves downward, and the second limiting member 312 extends out of the central cover plate 111a. Secondly, the user controls the portable load 200 to move along the X direction until the second locking fitting portion 250 is snap-fit with the second limiting member 312 extending out of the central cover plate 111a, thereby completing a snap-fit process of the first locking structure 20 and the portable load 200.

During the removal of the portable load 200, the user operates the portable load 200 along the X direction to separate the second locking fitting portion 250 from the second limiting member 312 through the fifth access opening 3123, and then removes the portable load 200. The second reset member 32 resets, returning the central cover plate 111a to the initial position.

In one of the embodiments, there are a plurality of second limiting members 312, and there are a plurality of second access openings 1114, where the second access openings 1114 are disposed in one-to-one correspondence with the second limiting members 312 for the latter to extend therethrough.

Specifically, each second access opening 1114 corresponds to one second limiting member 312, and the plurality of second limiting members 312 can simultaneously pass through the plurality of second access openings 1114 and extend out from a side of the bearing surface 111c, so as to be connected to a plurality of positions on the portable load 200, thereby increasing the connection strength and ensuring the reliable locking connection between the console 100 and the portable load 200.

In an example, the plurality of second access openings 1114 are arranged at intervals along at least two directions, e.g., arranged in a matrix, in which n second access openings 1114 are arranged along the X direction, and m second access openings 1114 are arranged along the Y direction.

In one of the embodiments, the second reset member 32 may be of a structure such as a spring or a torsion spring, and there may be one or more second reset members 32. For example, a spring is provided on a periphery of each second access opening 1114, thereby reducing an idle stroke of movement of the center cover plate 111a and making the resetting of the center cover plate 111a more reliable. In an example, a side of the central cover plate 111a facing the body 311 is provided with a first guide post 1115, and the second reset member 32 is sleeved on the first guide post 1115, so that a deformation direction of the second reset member 32 is limited by the first guide post 1115, thereby ensuring the consistency in the movement direction of the second reset member 32.

According to a third aspect, the present disclosure provides a third locking structure 40. Referring to FIGS. 18 to FIG. 21, the third locking structure 40 includes a mounting frame 41, a locking component 43, a second operating member 42, and a third reset member 44. The locking component 43 is movably disposed on the mounting frame 41 along the Z direction, and includes a third limiting member 431. The second operating member 42 is movably disposed on the mounting frame 41 in the X direction, where the Z direction intersects the X direction. The third reset member 44 is elastically connected between the locking component 43 and the mounting frame 41.

The locking component 43 has a locked position and an unlocked position in the Z direction. When the locking component 43 is in the locked position, the locking component 43 is fixed to the portable load 200, and the locking component 43 can be moved to the unlocked position along the Z direction under an external force, so as to remove the portable load 200. It can be understood that the external force can be applied by the user from the outside of the third locking structure 40.

When the locking component 43 is in the unlocked position, the portable load 200 disposed on the bearing surface 111c is not connected to the locking component 43. The second operating member 42 is in limiting fit with the locking component 43 along the Z direction, and the second operating member 42 can be moved relative to the locking component 43 along the X direction under the external force until the second operating member 42 and the locking component 43 achieve positional avoidance in the Z direction. The third reset member 44 drives the locking component 43 to return to the locked position along the Z direction, so that the third limiting member 431 locks the portable load 200. Thus, after the portable load 200 is disposed on the bearing surface 111c, the portable load 200 is locked by changing the position of the locking component 43.

The third locking structure 40 is fixedly connected to the console body 10 through the mounting frame 41. Moreover, the position of the locking component 43 on the mounting frame 41 is changed through the specific different operations of the second operating member 42 and the locking component 43, so that the locking component 43 is moved between the locked position in which it is fit with the portable load 200 and the unlocked position in which it is separated from the portable load 200.

Specifically, the locked position and the unlocked position are two extreme positions of the third limiting member 431 in the Z direction, and the locked position is located above the unlocked position relative to the portable load 200. The third limiting member 431 can move downward from the locked position to the unlocked position along the Z direction, and the third limiting member 431 can also move upward from the unlocked position to the locked position along the Z direction. It can be understood that the Z direction is a bidirectional direction, while upward or downward along the Z direction is a unidirectional direction.

A state in which the locking component 43 is in the locked position is considered as an initial state. The portable load 200 has a third locking fitting portion 260, and the third limiting member 431 of the locking component 43 can cooperate with the third locking fitting portion 260, thereby locking the portable load 200 placed on the bearing surface 111c to the console body 10. Specifically, the third limiting member 431 may be configured as a structure such as a hook, which is not specifically limited. Then, if the portable load 200 needs to be removed, the locking component 43 needs to be moved away from the portable load 200. At this time, specifically, the user can apply an external force to the locking component 43, so that the locking component 43 is moved to the unlocked position along the Z direction under the external force to be separated from the portable load 200, and then the user can remove the portable load 200 from the console body 10.

It can be understood that when the locking component 43 is in the locked position, the locking component 43, when subjected to a force, can be moved freely along the Z direction, so as to switch to the unlocked position. During the process of the third limiting member 431 moving from the locked position to the unlocked position, the user only needs to apply a force in the Z direction to the locking component 43 without operating the second operating member 42.

A state in which the locking component 43 is in the unlocked position is considered as an initial state. At this time, the third limiting member 431 does not cooperate with the portable load 200, that is, there is no portable load 200 on the bearing surface 111c, or the portable load 200 is movably disposed on the bearing surface 111c. Then, if the portable load 200 needs to be locked, a force needs to be applied to move the locking component 43 upward along the Z direction to approach the portable load 200 and cooperate with the third locking fitting portion 260. At this time, specifically, the user may apply the external force to the second operating member 42 along the X direction, so that the second operating member 42 moves along the X direction under the external force to avoid the locking component 43 in the Z direction. After the locking component 43 is no longer limited by the second operating member 42, the third reset member 44 drives the third limiting member 431 to reset along the Z direction, and move upward from the unlocked position to the locked position to connect with the portable load 200, thereby locking the portable load 200.

It can be understood that when the third limiting member 431 is in the unlocked position, the second operating member 42 is in limiting fit with the locking component 43. That is, at this time, the locking component 43, when subjected to a force in the Z direction, cannot be moved to the locked position. Only through the movement of the second operating member 42 along the X direction, such that the second operating member 42 avoids the locking component 43, can automatic resetting of the locking component 43 be realized through the third reset member 44. In other words, when the third limiting member 431 is in the unlocked position, if it is desired to switch to the locked position, there is no need to operate the locking component 43, and the user only needs to apply the force in the X direction to the second operating member 42 to move the second operating member 42, and then the locking component 43 can naturally automatically reset to the locked position under the driving of the third reset member 44.

In this way, in the present disclosure, the third locking structure 40 is operated in the up-down direction of the vehicle 1000, that is, a pressing force in the Z direction is applied to the locking component 43, so that the locking component 43 is separated from the portable load 200 and the portable load 200 is removed. The third locking structure 40 is operated in the front-rear direction of the vehicle 1000, that is, a pressing force in the X direction is applied to the second operating member 42, so that the locking component 43 automatically resets to the locked position to lock the portable load 200. This effectively locks the portable load 200 while ensuring quick and convenient mounting and removal.

In one of the embodiments, the portable load 200 can apply the external force to the second operating member 42 along the X direction, and when the third limiting member 431 is in the locked position, the portable load 200 abuts against the second operating member 42 along the X direction.

Specifically, after the user places the portable load 200 on the bearing surface 111c, the front panel 112 and the rear panel 121 are respectively located on the front side and the rear side of the portable load 200 in the X direction. If it is desired to lock the portable load 200, the portable load 200 can be operated to press the second operating member 42 rearward along the X direction, so that the locking component 43 automatically moves upward and resets to the locked position to lock with the first locking fitting portion 240 of the portable load 200. Thereafter, the portable load 200 remains in contact with the second operating member 42 throughout the locking process.

It can be understood that the third locking fitting portion 260 of the portable load 200 is disposed on a surface of the portable load 200 for pressing the second operating member 42, so as to realize automatic connection between the third locking fitting portion 260 and the locking component 43 after the second operating member 42 is pressed into place. When the portable load 200 needs to be mounted and locked, it is unnecessary to directly contact the second operating member 42, and it is only necessary to press the second operating member 42 through the portable load 200, which is simple and convenient.

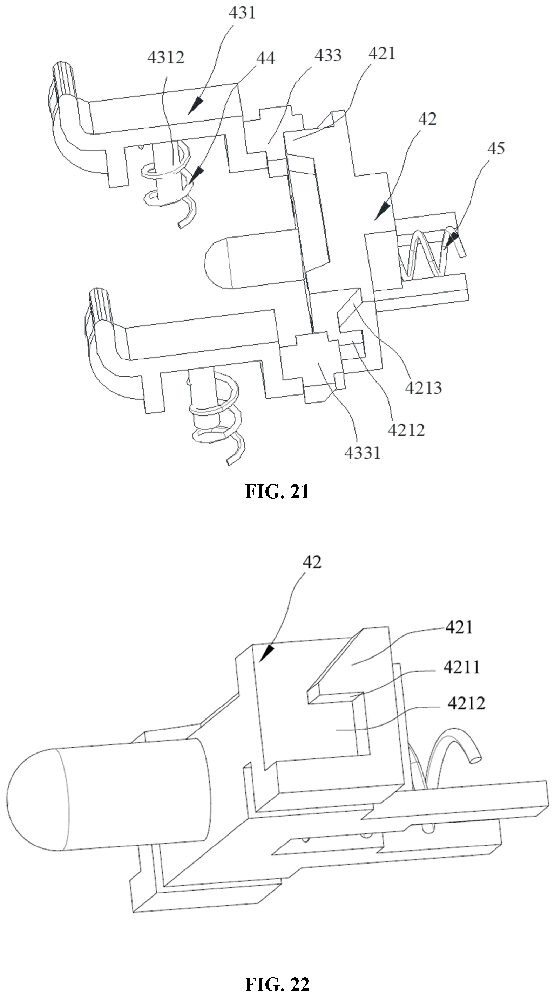

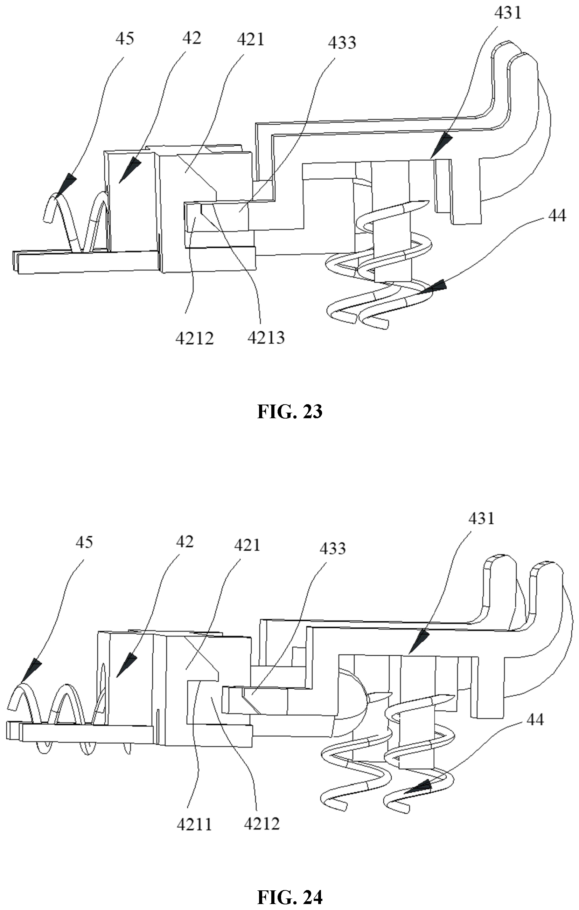

In one of the embodiments, referring to FIGS. 21 to 24, the second operating member 42 includes a first fitting portion 421, and the locking component 43 includes a second fitting portion 433. When the locking component 43 is in the unlocked position, the first fitting portion 421 is in limiting fit with the second fitting portion 433 along the Z direction, as shown in FIG. 23, and the third reset member 44 accumulates an elastic restoring force for resetting the locking component 43 to the locked position. The second operating member 42 can drive the first fitting portion 421 to move along the X direction until the first fitting portion 421 and the second fitting portion 433 achieve positional avoidance in the Z direction, as shown in FIG. 24, whereupon the third reset member 44 releases the elastic restoring force.

Specifically, the first fitting portion 421 and the second fitting portion 433 are specific portions of the second operating member 42 and the locking component 43 for fitting and limiting. When the first fitting portion 421 and the second fitting portion 433 achieve positional avoidance in the Z direction, it is considered that the second operating member 42 does not affect the free movement of the locking component 43 in the Z direction. Similarly, when the first fitting portion 421 is in limiting fit with the second fitting portion 433 in the Z direction, it is considered that the third operating member 432 limits the locking component 43, so that the locking component 43 cannot reset along the Z direction even under force, thereby ensuring that the locking component 43 is fixed in the unlocked position.

It can be understood that, because the unlocked position of the locking component 43 is located below the locked position, during an unlocking process, that is, during a process in which the locking component 43 moves from the locked position to the unlocked position, the locking component 43 can drive the third reset member 44 to deform, so that the third reset member 44 accumulates the elastic restoring force.

In an example, if it is desired to move the locking component 43 from the unlocked position to the locked position, the limiting fit between the first fitting portion 421 and the second fitting portion 433 needs to be released. At this time, the second operating member 42 is subjected to an external force and moves along the X direction, so that the second fitting portion 433 moves along the X direction to avoid the first fitting portion 421, after which the third reset member 44 releases the elastic restoring force, to drive the locking component 43 to reset from the unlocked position to the locked position. After that, the third reset member 44 returns to its original state, thereby fixing the locking component 43 in the locked position.

In one of the embodiments, the first fitting portion 421 has a first abutting surface 4211, and the second fitting portion 433 has a second abutting surface 4331. When the locking component 43 is in the unlocked position, the second abutting surface 4331 at least partially abuts against the first abutting surface 4211 along the Z direction. The second operating member 42 is configured to be capable of driving the first fitting portion 421 to move along the X direction under an external force until the first abutting surface 4211 and the second abutting surface 4331 achieve positional avoidance in the Z direction.

The limiting fit and the avoidance between the first fitting portion 421 and the second fitting portion 433 refer to the limiting fit and the avoidance between the first abutting surface 4211 and the second abutting surface 4331. Moreover, the avoidance between the first abutting surface 4211 and the second abutting surface 4331 is achieved by the movement of the first fitting portion 421, which causes the first abutting surface 4211 to move. After the first abutting surface 4211 avoids the second abutting surface 4331, the second fitting portion 433 drives the second abutting surface 4331 to move upward.

Specifically, when the locking component 43 is in the unlocked position, the first abutting surface 4211 limits the second abutting surface 4331, so that the second fitting portion 433 cannot move from the unlocked position to the locked position. Then, when the second operating member 42 is subjected to the force and moves along the X direction, the first abutting surface 4211 moves along the X direction, while the second fitting portion 433 and the second abutting surface 4331 remain where they were, until the second abutting surface 4331 is offset from the first abutting surface 4211 in the Z direction, after which the locking component 43 drives the second fitting portion 433 and the second abutting surface 4331 to reset to the locked position.

In an example, when the locking component 43 is in the locked position, it can move along the Z direction under force, so that the second fitting portion 433 and the second abutting surface 4331 move downward until the locking component 43 is separated from the portable load 200, and then the portable load 200 is removed. At this time, the second operating member 42 can still move along the X direction until the second abutting surface 4331 abuts against the first abutting surface 4211, so as to fix the locking component 43 in the unlocked position.

It can be understood that the movement of the second operating member 42 along the X direction can be realized by the user pulling the second operating member 42 from the outside, or can be realized automatically. In order to realize the automatic fixing of the position of the locking component 43, in one of the embodiments, the third locking structure further includes a fourth reset member 45, which is elastically connected between the mounting frame 41 and the second operating member 42 along the X direction.

When the second operating member 42 moves along the X direction under the external force, the fourth reset member 45 is driven by the second operating member 42 and deforms, thereby accumulating an elastic restoring force. When the external force disappears, the fourth reset member 45 releases the elastic restoring force, thereby driving the second operating member 42 to move along the Z direction.

Specifically, when the locking component 43 is in the locked position, it moves along the Z direction under force until the locking component 43 is separated from the portable load 200, and then the portable load 200 is removed. At this time, the external force pressed against the second operating member 42 disappears, and the fourth reset member 45 releases the elastic restoring force and drives the second operating member 42 to move along the X direction, until the second abutting surface 4331 at least partially abuts against the first abutting surface 4211, thereby fixing the locking component 43 in the unlocked position.

In this way, after the portable load 200 is removed, the locking component 43 may be automatically fixed in the unlocked position to facilitate the next locking of the portable load 200.

In addition, during the process of locking the portable load 200, the locking component 43 is locked with the portable load 200 by pressing the second operating member 42. Conventionally, after the locking of the portable load 200 is completed, the user needs to try to drag the portable load 200 to determine whether the portable load 200 has been locked, which is cumbersome and requires repeated confirmation by the user.

In the present disclosure, abutting collision between the two surfaces achieved through the fourth reset member 45 serves as a reminder. Specifically, when the locking component 43 moves to the unlocked position, the fourth reset member 45 drives the second fitting portion 433 to move, and the first abutting surface 4211 moves to abut against the second abutting surface 4331 in the locked position. The abutment between the two surfaces generates a collision sound, such as "click", so as to provide an in-position indication, that is, to remind the user that the locking component 43 has been fixed in the locked position, in other words, to remind the user that the portable load 200 has been locked in place.

It can be understood that, in some embodiments, the first abutting surface 4211 and the second abutting surface 4331 may be inclined relative to the Z direction, and the first abutting surface 4211 is inclined in the same direction as the second abutting surface 4331, so that the first abutting surface 4211 and the second abutting surface 4331 can be completely fit with each other. When the first abutting surface 4211 and the second abutting surface 4331 are fit, the second abutting surface 4331 is located to the upper left of the first abutting surface 4211. At this time, the second abutting surface 4331 limits the movement of the first abutting surface 4211 along the Z direction, and the first abutting surface 4211 limits the further movement of the second abutting surface 4331 along the X direction. The first abutting surface 4211 and the second abutting surface 4331 mutually limit each other, so that both the locking component 43 and the second operating member 42 are fixed.

In some other embodiments, the first fitting portion 421 may further include a locking space 4212, which is in communication with the first abutting surface 4211. When the locking component 43 is pressed and moves from the unlocked position to the locked position, the fourth reset member 45 drives the first fitting portion 421 to move until the second fitting portion 433 partially enters the locking space 4212 along the X direction, and at least a portion of the second abutting surface 4331 abuts against the first abutting surface 4211 in the Z direction, so as to fix the locking component 43 in the unlocked position. When the locking component 43 needs to reset to the locked position, the second operating member 42 is driven to move along the X direction until the second fitting portion 433 is completely separated from the locking space 4212, the first abutting surface 4211 and the second abutting surface 4331 achieve positional avoidance in the Z direction, and the third reset member 44 releases the elastic restoring force to drive the locking component 43 to the locked position.

In an example, the third reset member 44 and the fourth reset member 45 may each be a spring, a torsion spring, or the like, and may be provided in one or more, which is not limited in the present disclosure.

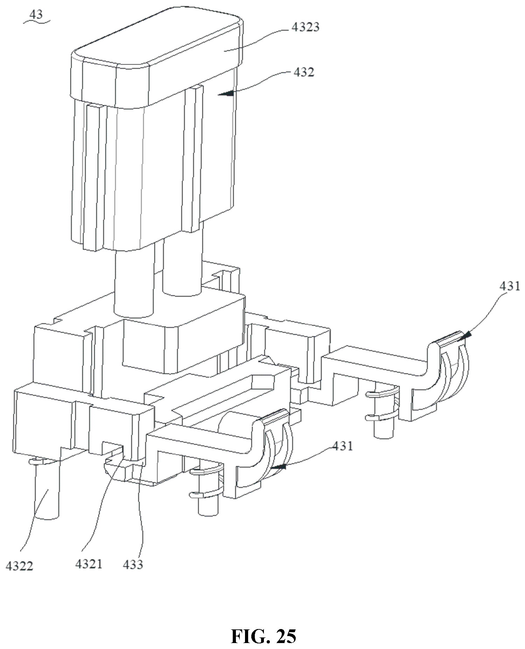

In one of the embodiments, referring to FIG. 25, the locking component 43 further includes a third operating member 432 disposed in the armrest box 12 and connected to the third limiting member 431. The third operating member 432 is movably disposed on the mounting frame 41 along the Z direction and is connected to the third limiting member 431, and the third operating member 432 can drive the third limiting member 431 to move to the unlocked position along the Z direction under the external force.

Further, the third operating member 432 includes an abutting portion 4321. The abutting portion 4321 abuts against the third limiting member 431 along the X direction, for example, against the second abutting surface 4331 of the second fitting portion 433 of the third limiting member 431. In this case, the second abutting surface 4331 has a dual function. First, the second abutting surface 4331, after subjected to the force from the abutting portion 4321 along the X direction, drives the entire third limiting member 431 to move. Second, the second abutting surface 4331 abuts against and limits the first abutting surface 4211 along the first direction L1, thereby fixing the third limiting member 431 in the unlocked position.

It can be understood that the third reset member 44 may be elastically connected between the third operating member 432 and the mounting frame 41, and may also be elastically connected between the third limiting member 431 and the mounting frame 41. Specifically, the third operating member 432 further includes a third guide post 4322, and the locking member includes a second guide post 4312. The third reset members 44 may be sleeved on the second guide post 4312 and the third guide post 4322, respectively, thereby realizing directional deformation.

The third operating member 432 is disposed in the second storage space within the armrest box 12. When the user needs to operate the locking component 43, the user can open the armrest cover 123, and press the third operating member 432 downward by hand, thereby realizing the movement of the third limiting member 431. When the second operating member 42 does not need to be operated, the armrest cover 123 is closed to ensure the appearance flatness of the console 100.

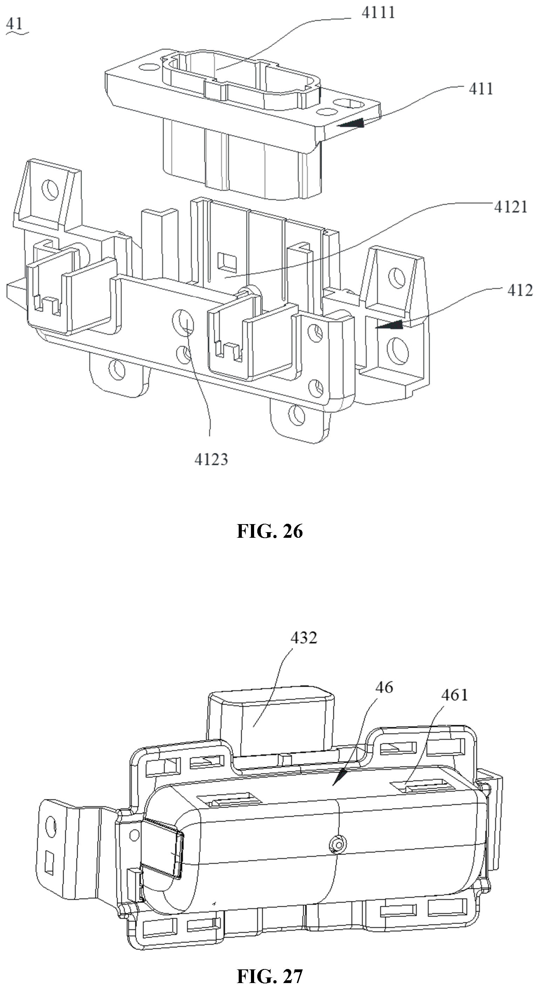

Specifically, referring to FIG. 26, the mounting frame 41 may be of an integrated structure or a split structure. In a specific embodiment, the mounting frame 41 includes a first frame body 411 and a second frame body 412 connected to each other. A fourth assembly cavity 4111 is defined inside the first frame body 411, and the third operating member 432 is disposed in the fourth assembly cavity 4111, and an end of the third operating member 432 in the Z direction extends out of the fourth assembly cavity 4111 to form a pressing portion. A fifth assembly cavity 4121, a sixth access opening 4122, and a through hole 4123 are defined by the second frame body 412, where the sixth access opening 4122 and the through hole 4123 are in communication with the fifth assembly cavity 4121. An end of the third limiting member 431 extends out of the sixth access opening 4122 to form a locking portion 4311, and the locking portion 4311 can extend into the third locking fitting portion 260. An end of the second operating member 42 extends out of the through hole 4123. When the user presses the pressing portion from a side of the first frame body 411, the third limiting member 431 moves along the Z direction, and when the user presses the second operating member 42 from a side of the second frame body 412, the first fitting portion 421 moves along the X direction.

In one of the embodiments, the locking portion 4311 may be configured as a hook-shaped structure, and the hook-shaped structure extends upward along the Z direction to cooperate with the third locking fitting portion 260. At this time, when the locking portion 4311 is pressed downward, the hook-shaped structure is separated from the third locking fitting portion 260 along the Z direction. The pressing portion may be a pressing surface, a pressing handle, etc., which is not limited in the present disclosure.

In some specific embodiments, there may be one or more third limiting members 431. When there are a plurality of third limiting members 431, the plurality of third limiting members 431 may be arranged at intervals along the Y direction.

It can be understood that the plurality of third limiting members 431 can be driven by the second operating member 42 to move synchronously, so that the plurality of third limiting members 431 simultaneously extend into the corresponding third locking fitting portions 260 or are separated from the corresponding third locking fitting portions 260, thereby enhancing the connection strength.

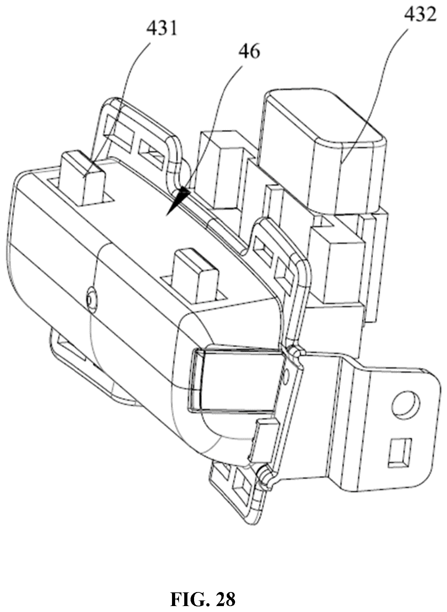

In one of the embodiments, referring to FIGS. 27 and 28, the third limiting member 431 includes a hidden housing 46, which is sleeved outside the mounting frame 41 and has a third access opening 461. When the locking component 43 is in the unlocked position, the third limiting member 431 extends out of the third access opening 461. When the locking component 43 is in the locked position, the third limiting member 431 is located in the hidden housing 46.

It can be understood that when the third limiting member 431 of the third locking structure 40 is in a non-hidden state, that is, when the third limiting member 431 is in the unlocked position, the user can intuitively see the third limiting member 431 from the inside of the vehicle 1000. Therefore, in order to ensure the aesthetic appearance, the hidden housing 46 is provided outside the mounting frame 41, and the third access opening 461 is provided on the hidden housing 46. When the locking component 43 is in the unlocked position, the third limiting member 431 is hidden in the hidden housing 46, and at this time, the user cannot directly see the third limiting member 431 from the inside of the driver's cab. When the locking component 43 is in the locked position, the third limiting member 431 extends out of the hidden housing 46, thereby realizing the cooperation and locking with the portable load 200.

According to another aspect of the present disclosure, there is further provided a console assembly 100A, including the portable load 200 and the console 100 in any one of the foregoing embodiments, where the portable load 200 is detachably connected to the console 100, and the first storage space is provided inside the portable load 200.

Specifically, the portable load 200 has a first side surface 210, a second side surface 220, and a third side surface 230. When the portable load 200 is placed on the bearing surface 111c, the first side surface 210 abuts against the bearing surface 111c, the second side surface 220 faces the front panel 112, and the third side surface 230 faces the rear panel 121. The entire locking process of the portable load 200 is as follows.

The user places the portable load 200 on the bearing surface 111c along the Z direction. Due to the gravity of the portable load 200 itself, the portable load 200 drives the central cover plate 111a to move downward, so that the second limiting member 312 extends out. The user moves the portable load 200 rearward along the X direction, so that the second locking fitting portion 250 enters the snap-fit space 33 and is locked with the second limiting member 312 to complete the Z direction limiting mounting. While the user moves the portable load 200 rearward along the X direction, the portable load 200 presses the second operating member 42 along the X direction, so that the second operating member 42 and the locking component 43 achieve positional avoidance in the Z direction, and the second reset member 32 drives the locking component 43 to reset, so that the second limiting member 312 moves to the locked position and is locked with the third locking fitting portion 260 on the third side surface 230. Then, the user rotates the first operating member 221, so that the first limiting member 231 extends out of the edge cover and is inserted into the first locking fitting portion 240 on a side of the second side surface 220 close to the first surface 3122a, to complete the entire locking processes.

Similarly, after the entire locking processes is completed, if the portable load 200 needs to be unlocked, first, the cup sleeve component 50 is rotated to be fit with the front panel 112. The user rotates the first operating member 221 in a reverse direction along the Z direction, so that the first limiting member 231 retracts. The user opens the armrest box 12, and presses the third operating member 432, so that the second limiting member 312 moves downward to the unlocked position and then is fixed. After that, the user controls the portable load 200 to move forward along the X direction to be separated from the third limiting member 431, and removes the portable load 200.

The console assembly 100A of the present embodiment has the same features and technical effects as the above-mentioned console 100, which will not be repeated herein. The user can choose to remove the portable load 200 or assemble the portable load 200 on the console 100 according to actual needs, so as to provide a variety of different functions through the first storage space inside the portable load 200, e.g., storage box, refrigerator, makeup case, game island, etc., thereby forming flexible mounting.

According to yet another aspect of the present disclosure, there is further provided a vehicle 1000, including the console assembly 100A in any one of the foregoing embodiments. The vehicle 1000 may be a private vehicle, such as a car, an SUV, an MPV, or a pickup truck. The vehicle 1000 may alternatively be a commercial vehicle, such as a van, a bus, a minivan, or a large trailer. The vehicle 1000 may be a fuel vehicle or a new energy vehicle. When the vehicle 1000 is the new energy vehicle, it may be a hybrid vehicle or a pure electric vehicle.

In this way, the vehicle 1000 provided in the present disclosure can meet multifunctional requirements of a user while ensuring convenient and reliable mounting and removal of the portable load 200.

While the preferred embodiments of the present disclosure have been described in detail as above, the present disclosure is not limited to the above embodiments. Those skilled in the art may make various equivalent modifications or substitutions without departing from the spirit of the present disclosure. Such equivalent modifications or substitutions all fall within the scope of the present disclosure defined by the claims.

## Claims

1. A console, applied to a vehicle having an X direction, a Y direction, and a Z direction, the console comprising:
a console body having a bearing surface configured to bear a portable load, the portable load having a first storage space therein; and
a first locking structure and a second locking structure, both disposed on the console body and detachably connected to the portable load;
wherein the first locking structure is configured to limit a degree of freedom of the portable load in the X direction and/or the Y direction, and the second locking structure is configured to limit a degree of freedom of the portable load in the Z direction.

2. The console according to claim 1, wherein the first locking structure is configured to limit the degree of freedom of the portable load in the X direction, and the console further comprises a third locking structure configured to limit the degrees of freedom of the portable load in the X direction and the Y direction;
the first locking structure has a first limiting member, the second locking structure has a second limiting member, and the third locking structure has a third limiting member; and
the first limiting member and the third limiting member are in limiting connection with opposite sides of the portable load along the X direction, the first limiting member and the third limiting member are both movably matched with the portable load along the Z direction, and the second limiting member is in limiting connection with the portable load along the Z direction.

3. The console according to claim 2, wherein the console body comprises a housing component having a first assembly cavity, and the bearing surface is disposed on a side of the housing component facing away from the first assembly cavity; and
the first limiting member and the second limiting member are both configured to extend out of the first assembly cavity from a side of the bearing surface when subjected to an external force.

4. The console according to claim 3, wherein the console body further comprises an armrest box disposed on a side of the housing component in the X direction, with a second storage space formed inside the armrest box, and the armrest box and the housing component define a load space in communication with the bearing surface;
the third locking structure is disposed in the second storage space, and the third limiting member extends from the second storage space to the load space; and
the third limiting member is configured to move along the Z direction when subjected to the external force to lock or unlock the portable load.

5. The console according to claim 4, wherein the housing component comprises a top cover and a front panel, the armrest box comprises a rear panel, the front panel and the rear panel are connected to the top cover at an angle and are disposed on opposite sides of the top cover in the X direction, and a side of the top cover forms the bearing surface; and
the first limiting member and the second limiting member are configured to extend from the top cover to the load space along the Z direction when subjected to the external force, the first limiting member is located on a side of the top cover close to the front panel, and the third limiting member extends from the rear panel to the load space along the X direction.

6. The console according to claim 5, wherein the first locking structure comprises a driving component and a limiting component, the limiting component comprises the first limiting member, the driving component comprises a first operating member and a transmission component, the transmission component is disposed in the housing component, the first operating member is located in the load space, an end of the first operating member passes through the top cover and is drivingly connected to the transmission component, and the transmission component is drivingly connected to the limiting component;
wherein the first limiting member has an unlocked position in which the first limiting member is located in the housing component and a locked position in which the first limiting member partially extends to the load space, and the first operating member is configured to rotate in different circumferential directions relative to the top cover under force, so as to drive the first limiting member to switch between the unlocked position and the locked position through the transmission component.

7. The console according to claim 6, wherein the limiting component further comprises a connecting portion, the top cover has a first access opening directly opposite to the limiting portion along the Z direction, and the transmission component is drivingly connected to the connecting portion; and
the first operating member rotates and drives the transmission component to rotate, so as to drive the first limiting member to extend out of the first access opening or retract into the housing component.

8. The console according to claim 7, wherein the transmission component comprises a first transmission wheel and a transmission shaft, the first operating member is connected to an axial end of the first transmission wheel, the first transmission wheel is drivingly connected to the transmission shaft, and the transmission shaft is connected to the connecting portion; and
the first operating member rotates and drives the first transmission wheel to rotate, and the first transmission wheel drives the transmission shaft to rotate to drive the limiting portion to move in an axial direction of the transmission shaft.

9. The console according to claim 8, wherein the transmission component further comprises a second transmission wheel and a third transmission wheel, the first transmission wheel is in gear transmission with the second transmission wheel, the second transmission wheel is in gear transmission with the third transmission wheel, and the third transmission wheel is in gear transmission with the transmission shaft; and
the first transmission wheel drives the transmission shaft to rotate through the second transmission wheel and the third transmission wheel, the first transmission wheel comprises a gear with an outer diameter greater than that of a gear of the second transmission wheel, and the outer diameter of the gear of the second transmission wheel is greater than an outer diameter of a gear of the third transmission wheel.

10. The console according to claim 8, wherein the connecting portion is sleeved on an outer periphery of the transmission shaft; and
the first locking structure comprises a guide portion extending along the axial direction of the transmission shaft, and the limiting portion is slidably connected to the guide portion.

11. The console according to claim 5, wherein the second locking structure comprises a connecting component and a second reset member, and the top cover comprises a central cover plate;
the central cover plate has a second access opening, the second reset member is elastically connected between the central cover plate and the body, the connecting component is disposed in the housing component and comprises a body and a second limiting member, and the second limiting member is disposed on a side of the body and protrudes from the body;
wherein the central cover plate has a loading position and an initial position, when the central cover plate is in the loading position, an end of the second limiting member passes through the second access opening to protrude from the bearing surface, and when the central cover plate is in the initial position, the second limiting member does not protrude beyond the bearing surface along a direction from the body to the central cover plate; and
the central cover plate is capable of moving relative to the body from the initial position to the loading position under force, and drives the first reset member to deform and accumulates an elastic restoring force that drives the central cover plate to reset to the initial position.

12. The console according to claim 11, wherein the top cover further comprises an edge plate disposed around an outer periphery of the central cover plate, surfaces of the central cover plate and the edge plate facing the same side together form the bearing surface, and an end of the edge plate is connected to the front panel at an angle; and
the first limiting member is configured to extend from the edge plate to the load space along the Z direction when subjected to the external force, and the first limiting member is located on a side of the edge plate close to the front panel.

13. The console according to claim 11, wherein when the central cover plate is in the initial position, an outer edge of the central cover plate abuts against the body and defines a second assembly cavity together with the connecting component; and
the body has a second bottom plate directly opposite to the central cover plate, the central cover plate is configured to move toward a side close to the second bottom plate under gravity of the portable load, such that an end of the second limiting member extends out of the second assembly cavity from the second access opening.

14. The console according to claim 11, wherein the second limiting member has a first surface facing away from the body, and the first surface extends beyond the bearing surface when the central cover plate is in the loading position; and
the first surface and the bearing surface are coplanar when the central cover plate is in the initial position.

15. The console according to claim 14, wherein when the central cover plate is in the loading position, a portion of the second limiting member protruding from the bearing surface defines a snap-fit space together with the bearing surface; and
the snap-fit space allows a portion of the portable load to enter along the X direction and be snap-fit with the second limiting member.

16. The console according to claim 5, wherein the third locking structure comprises a mounting frame, a locking component, a second operating member, and a third reset member, the mounting frame is connected to the housing component, the locking component is movably disposed on the mounting frame along the Z direction, the second operating member is movably disposed on the mounting frame along the X direction, and the third reset member is elastically connected between the locking component and the mounting frame;
wherein the locking component has a locked position and an unlocked position in the Z direction, and when the locking component is in the locked position, the locking component is capable of moving to the unlocked position along the Z direction under an external force; and
when the locking component is in the unlocked position, the first operating member is in limiting fit with the locking component along the Z direction, and the first operating member is capable of moving relative to the locking component along the X direction under the external force until the second operating member and the locking component achieve positional avoidance in the Z direction, and the third reset member drives the locking component to reset to the locked position.

17. The console according to claim 16, wherein the first operating member comprises a first fitting portion, the locking component comprises a second fitting portion, and when the locking component is in the unlocked position, the first fitting portion is in limiting fit with the second fitting portion along the Z direction, and the third reset member accumulates an elastic restoring force configured to reset the locking component to the locked position; and
the second operating member is capable of driving the first fitting portion to move along the X direction until the first fitting portion and the second fitting portion achieve positional avoidance in the Z direction, and the third reset member releases the elastic restoring force.

18. The console according to claim 17, wherein the first fitting portion has a first abutting surface, and the second fitting portion has a second abutting surface;
when the locking component is in the unlocked position, the second abutting surface at least partially abuts against the first abutting surface along the Z direction; and
the first operating member is configured to drive the first fitting portion to move along the X direction under an external force until the first abutting surface and the second abutting surface achieve positional avoidance in the Z direction.

19. The console according to claim 18, wherein the third locking structure further comprises the third reset member elastically connected between the mounting frame and the first operating member along the X direction.

20. The console according to claim 16, wherein the locking component further comprises a third operating member disposed in the armrest box; and
the third operating member is connected to the third limiting member, the third operating member is movably disposed on the mounting frame along the Z direction and is connected to the third limiting member, and the third operating member is capable of driving the third limiting member to move to the unlocked position along the Z direction under an external force.

21. The console according to claim 20, wherein the third locking structure comprises a hidden housing sleeved outside the mounting frame and having a third access opening; and
when the locking component is in the locked position, the third limiting member extends out of the third access opening, and when the locking component is in the unlocked position, the third limiting member is located in the hidden housing.

22. A console assembly, comprising a portable load and the console according to any one of claims 1 to 21, the portable load being detachably connected to the console body, and the portable load having the first storage space therein.

23. A vehicle, comprising a vehicle body and the console assembly according to claim 22, wherein the console assembly is disposed on the vehicle body.
